# EUROPEAN PATENT APPLICATION

(11) **EP 4 224 985 A1**
(43) Date of publication of application: **09.08.2023**
(21) Application number: 20958120.6
(22) Date of filing: 21.10.2020
(51) Int. Cl.: H04W 76/23

(54) **SIDELINK COMMUNICATION METHOD AND APPARATUS**

(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN); XIAO, Xiao, Shenzhen, Guangdong 518129 (CN)
(74) Representative: Körber, Martin Hans
(86) International application number: PCT/CN2020/122600
(87) International publication number: WO 2022/082537

(57) **Abstract**

Embodiments of this application provide a sidelink communication method and an apparatus. The method includes: When a first terminal device (a transmitting end) has to-be-sent first data or first signaling, the first terminal device first determines whether the first data or the first signaling supports multicast or broadcast SL DRX. When the first data or the first signaling supports multicast or broadcast SL DRX, the first terminal device obtains an SL resource corresponding to multicast or broadcast SL DRX, and sends the first data or the first signaling by using the SL resource corresponding to multicast or broadcast SL DRX. The SL resource used by the transmitting end to send the first data or the first signaling is the SL resource corresponding to multicast or broadcast SL DRX, and a receiving end terminal device also receives the first data or the first signaling on an SL resource corresponding to multicast or broadcast SL DRX. Therefore, it can be ensured that the receiving end terminal device can successfully receive the first data or the first signaling that supports multicast or broadcast SL DRX, thereby improving SL communication quality.

## Description

### TECHNICAL FIELD

This application relates to communication technologies, and in particular, to a sidelink communication method and an apparatus.

### BACKGROUND

User equipment (user equipment, UE) may communicate with each other through a network or may directly communicate with each other. Direct communication between the UEs is also referred to as sidelink (sidelink, SL) communication. In the SL communication, data is transmitted between two UEs through a PC5 air interface. A typical application of the SL communication is a vehicle to everything (vehicle to everything, V2X) scenario. In the V2X scenario, one vehicle is one UE.

In a process of the SL communication, to reduce power consumption of the UEs, transmitting end UE or receiving end UE may use a discontinuous reception (discontinuous reception, DRX) mechanism. The DRX mechanism means that when the UE has no data to be sent or received, the UE turns off a transmitter or a receiver in a period of time to reduce power consumption. A DRX cycle includes an active time (active time) and a sleep time (or referred to as an inactive time). The UE sends or receives data in the active time, and does not send or receive data in the sleep time. In the conventional technology, the UE may support SL DRX based on a unicast manner, and/or support SL DRX based on a broadcast manner and a multicast manner.

However, when the transmitting end UE sends data or signaling that supports multicast or broadcast SL DRX, an SL transmission resource used by the transmitting end UE may not correspond to an SL receiving resource used by the receiving end UE in a broadcast and multicast SL DRX state. Consequently, the receiving end UE cannot receive the data or signaling that supports multicast or broadcast SL DRX, and quality of SL communication is affected.

### SUMMARY

Embodiments of this application provide a sidelink communication method and an apparatus, to avoid a miss of a service or signaling that supports multicast or broadcast SL DRX, and improve quality of SL communication.

A first aspect of this application provides a sidelink communication method, applied to a first terminal device. The method includes: determining that first data or first signaling supports first DRX, where the first DRX is multicast or broadcast SL DRX; obtaining a first SL resource, where the first SL resource is an SL resource corresponding to the first DRX; and sending the first data or the first signaling on the first SL resource. When sending corresponding data or signaling that supports multicast or broadcast SL DRX, a terminal device obtains a resource corresponding to multicast or broadcast SL DRX, and sends the data or signaling by using a resource corresponding to multicast or broadcast SL DRX. Because both a sending resource used by a transmitting end and a receiving resource used by a receiving end are both resources corresponding to multicast or broadcast SL DRX, it can be ensured that the corresponding data or signaling that supports multicast or broadcast SL DRX is successfully received by the receiving end, thereby improving quality of SL communication.

In an example manner, the determining that first data or first signaling supports first DRX includes: An access stratum receives first indication information from an upper layer, where the first indication information indicates that the first data or the first signaling supports multicast or broadcast SL DRX.

In an example manner, the first indication information includes: a service or a quality of service QoS flow associated with the first data supports multicast or broadcast SL DRX.

In an example manner, the obtaining a first SL resource includes: sending a first request message to a network device, where the first request message is for requesting the first SL resource; and receiving information about the first SL resource sent by the network device.

Optionally, the first request message includes second indication information, and the second indication information indicates that an SL resource required by data or signaling corresponding to a destination address or a QoS flow is an SL resource corresponding to multicast or broadcast DRX.

Alternatively, before the first terminal device sends the first request message to the network device, the first terminal device sends second indication information to the network device, where the second indication information indicates that an SL resource required by data or signaling corresponding to a destination address or a QoS flow is an SL resource corresponding to multicast or broadcast DRX.

Optionally, the first request message is any one of the following messages: an SL scheduling request SR, an SL buffer status report BSR, and a user assistance information UAI message.

When the first request message is any one of the following messages: an SL scheduling request SR, an SL buffer status report BSR, and a user assistance information UAI message, optionally, the second indication information is carried in a sidelink user information SUI message.

In an example manner, the first request message is a dedicated SL SR, and the first SL resource is allocated by the network device to the first terminal device based on the dedicated SL SR.

In another example manner, when the first request message is the dedicated SL SR, before the first terminal device sends the dedicated SL SR to the network device, the first terminal device sends an SUI message to the network device, where the SUI message includes the second indication information, and the first terminal device receives the dedicated SL SR configured by the network device.

In still another example manner, when the first request message is an SL SR, the SL SR includes the second indication information. The first SL resource is allocated by the network device to the first terminal device based on the second indication information.

In an example manner, when the first request message is an SL BSR, the first terminal device sends the SL BSR to the network device by using a dedicated LCG or a dedicated destination address index. The first SL resource is allocated by the network device to the first terminal device based on the dedicated LCG or the dedicated destination address index, or is predefined in a protocol.

In another example manner, when the first request message is an SL BSR, before the first terminal device sends the SL BSR to the network device by using the dedicated LCG or the dedicated destination address index, the first terminal device sends an SUI message to the network device, where the SUI message includes the second indication information, the first terminal device receives configuration information that is of the dedicated LCG or the dedicated destination address index and that is sent by the network device, and the dedicated LCG or the dedicated destination address index is configured by the network device based on the second indication information.

In still another example manner, when the first request message is an SL BSR, the SL BSR includes the second indication information. The first SL resource is allocated by the network device to the first terminal device based on the second indication information.

In still another example manner, when the first request message is an SL BSR, before sending the SL BSR to the network device, the first terminal device sends an SUI to the network device, where the SUI includes the second indication information.

In still another example manner, the first request message is an SL BSR in a specific format, and the SL BSR in the specific format is specially for requesting an SL resource corresponding to multicast or broadcast DRX. The first SL resource is allocated by the network device to the first terminal device based on a format of the SL BSR.

In an example manner, when the first request message is a UAI message, the UAI message includes the second indication information. The first SL resource is allocated by the network device to the first terminal device based on the second indication information.

In another example manner, when the first request message is a UAI message, before sending the UAI message to the network device, the first terminal device sends an SUI message to the network device, where the SUI message includes the second indication information. The first SL resource is a semi-persistent scheduling SPS resource, and the first SL resource is allocated by the network device to the first terminal device based on the second indication information and the UAI message.

Optionally, the first signaling includes one or more pieces of the following signaling: a message in an SL unicast connection establishment process, a message in a relay UE discovery process, an SL capability related message of UE, and a first PC5 RRC reconfiguration message.

In another example manner, that the first terminal device obtains a first sidelink SL resource includes: The first terminal device obtains the first SL resource by measuring an idle SL resource.

In an example manner, that the first terminal device sends the first data or the first signaling on the first SL resource includes: The first terminal device only selects or preferentially selects, from to-be-transmitted destination addresses, a destination address corresponding to the first data or the first signaling as a destination address for transmission.

Only the destination address corresponding to the first data or the first signaling is selected or preferentially selected from the to-be-transmitted destination addresses for transmission, so that it can be ensured that the first data or the first signaling is preferentially transmitted, thereby avoiding delayed transmission or discarding of the first data or the first signaling due to LCP.

In another example manner, that the first terminal device sends the first data or the first signaling on the first SL resource includes: The first terminal device only selects or preferentially selects, from to-be-transmitted logical channels, a logical channel corresponding to the first data or the first signaling as a logical channel for transmission.

Only the logical channel corresponding to the first data or the first signaling is selected or preferentially selected from the to-be-transmitted logical channels for transmission, so that it can be ensured that the first data or the first signaling is preferentially transmitted, thereby avoiding delayed transmission or discarding of the first data or the first signaling due to LCP.

A second aspect of this application provides a sidelink communication method, applied to a network device. The method includes: receiving a first request message sent by a first terminal device, where the first request message is for requesting a first sidelink SL resource, the first SL resource is an SL resource corresponding to first discontinuous reception DRX, and the first DRX is multicast or broadcast DRX; and allocating the first SL resource to the first terminal device based on the first request message. A transmitting end requests, from the network device by sending the first request message, a resource corresponding to multicast or broadcast SL DRX, and the network device allocates, to the transmitting end based on the first request message, a resource corresponding to multicast or broadcast SL DRX. Because both a sending resource used by the transmitting end and a receiving resource used by a receiving end are SL resources corresponding to multicast or broadcast, it can be ensured that data or signaling that supports multicast or broadcast SL DRX is successfully received by the receiving end, thereby improving quality of SL communication.

In an example manner, the first request message includes second indication information, and the second indication information indicates that an SL resource required by data or signaling corresponding to a destination address or a QoS flow is an SL resource corresponding to multicast or broadcast DRX.

In an example manner, before that the network device receives a first request message sent by a first terminal device, the method further includes: The network device receives second indication information sent by the first terminal device, where the second indication information indicates that an SL resource required by data or signaling corresponding to a destination address or a QoS flow is an SL resource corresponding to multicast or broadcast DRX.

Optionally, the first request message is any one of the following messages: an SL scheduling request SR, an SL buffer status report BSR, and a user assistance information UAI message.

Optionally, the first request message is any one of the following messages: an SL scheduling request SR, an SL buffer status report BSR, and a user assistance information UAI message, and the second indication information is carried in a sidelink user information SUI message.

In an example manner, the first request message is a dedicated SL SR, the dedicated SL SR is for requesting an SL resource corresponding to multicast or broadcast SL DRX, and the network device determines, based on the dedicated SL SR, that a resource requested by the SL SR is a resource corresponding to multicast or broadcast SL DRX, and allocates the first SL resource to the first terminal device.

In another example manner, before the network device receives the dedicated SL SR, the network device receives an SUI message sent by the first terminal device, where the SUI message includes the second indication information, and the network device configures the dedicated SL SR for the first terminal device based on the second indication information.

In still another example manner, when the first request message is an SL SR, the SL SR includes the second indication information, and the network device allocates the first SL resource to the first terminal device based on the second indication information.

In an example manner, when the first request message is an SL BSR, the SL BSR is sent by the first terminal device to the network device by using a dedicated LCG or a dedicated destination address index. The network device determines, based on the dedicated LCG or the dedicated destination address index, that the resource requested by the SL BSR is a resource corresponding to multicast or broadcast SL DRX, and allocates the first SL resource to the first terminal device.

In another example manner, when the first request message is an SL BSR, before the network device receives the SL BSR, the network device receives an SUI message sent by the first terminal device, where the SUI message includes the second indication information, and the first terminal device configures the dedicated LCG or the dedicated destination address index for the SL BSR based on the second indication information.

In still another example manner, when the first request message is an SL BSR, the SL BSR includes the second indication information. The network device allocates the first SL resource to the first terminal device based on the second indication information.

In still another example manner, when the first request message is an SL BSR, before the network device receives the SL BSR, the network device receives an SUI message sent by the first terminal device, where the SUI includes second indication information, and the network device allocates the first SL resource to the first terminal device based on the second indication information and the SL BSR.

In still another example manner, the first request message is an SL BSR in a specific format, and the SL BSR in the specific format is specially for requesting an SL resource corresponding to multicast or broadcast DRX. The network device allocates the first SL resource to the first terminal device based on the format of the SL BSR.

In an example manner, when the first request message is a UAI message, the UAI message includes the second indication information. The network device allocates the first SL resource to the first terminal device based on the second indication information.

In another example manner, when the first request message is a UAI message, before receiving the UAI message, the network device receives an SUI message sent by a first network device, where the SUI message includes the second indication information. The first SL resource is the first SL resource allocated by the network device to the first terminal device based on the second indication information and the UAI message, where the first SL resource is a semi-persistent scheduling SPS resource.

Optionally, the first signaling includes one or more pieces of the following signaling: a message in an SL unicast connection establishment process, a message in a relay UE discovery process, an SL capability related message of UE, and a first PC5 radio resource control RRC reconfiguration message.

A third aspect of this application provides a sidelink communication method. An access stratum receives first indication information from an upper layer, where the first indication information indicates that first data or first signaling supports first discontinuous reception DRX, and the first DRX is multicast or broadcast SL DRX; and activates the first DRX when it is determined, based on the first indication information, that currently to-be-received data or signaling supports the first DRX.

A fourth aspect of this application provides a sidelink communication method, applied to a second terminal device, and including: deactivating first discontinuous reception DRX at a first moment, where the first DRX is multicast or broadcast sidelink SL DRX, the first moment is a receiving moment of an SL unicast connection establishment message or a receiving moment of a discovery request message, and activating the first DRX at a second moment, where the second moment is a receiving moment of an SL unicast connection establishment accept message, a receiving moment of a first PC5 radio resource control RRC reconfiguration message, a completion moment of unicast connection DRX configuration, or a timeout moment of a first timer.

In the method, a receiving end terminal device disables the first DRX between the first moment and the second moment. Disabling the first DRX means that the receiving end terminal device receives data in all time periods corresponding to a normal SL resource, and is not limited to receiving data only on an SL resource corresponding to multicast or broadcast SL DRX. Therefore, it can be ensured that the receiving end terminal device successfully receives signaling or data that supports multicast or broadcast SL DRX, thereby improving quality of SL communication.

In an example manner, the terminal device starts the first timer at the first moment.

In an example manner, the terminal device deactivates first DRX at a first moment includes:

The terminal device deactivates the first DRX after a preset time is delayed at the first moment.

A fifth aspect of this application provides a sidelink communication method, applied to a second terminal device, and including: receiving SCI sent by a first terminal device; and when the second terminal device is in a multicast or broadcast SL DRX state and a resource corresponding to a TB indicated by the SCI does not belong to or partially belongs to an SL resource corresponding to multicast or broadcast SL DRX, skipping receiving the TB indicated by the SCI, or receiving the TB indicated by the SCI, but skipping starting a HARQ RTT timer or an inactivity timer corresponding to the SCI.

In this embodiment, after the second terminal device receives the SCI, the HARQ TTT timer or the INACTIVITY timer corresponding to the TB indicated by the SCI is not started, so that subsequent receiving of corresponding retransmitted data can be avoided, thereby reducing energy consumption of a terminal device.

A sixth aspect of this application provides a first terminal device, including:
a determining module, configured to determine that first data or first signaling supports first discontinuous reception DRX, where the first DRX is multicast or broadcast sidelink SL DRX;
an obtaining module, configured to obtain a first SL resource, where the first SL resource is an SL resource corresponding to the first DRX; and
a sending module, configured to send the first data or the first signaling on the first SL resource.

In an example manner, the determining module is specifically configured to receive first indication information from an upper layer of the first terminal device, where the first indication information indicates that the first data or the first signaling supports multicast or broadcast SL DRX.

In an example manner, the first indication information includes: a service or a quality of service QoS flow associated with the first data supports multicast or broadcast SL DRX.

In an example manner, the obtaining module is specifically configured to: send a first request message to a network device, where the first request message is for requesting the first SL resource; and receive information about the first SL resource sent by the network device.

Optionally, the first request message includes second indication information, and the second indication information indicates that an SL resource required by data or signaling corresponding to a destination address or a QoS flow is an SL resource corresponding to multicast or broadcast DRX.

Alternatively, the obtaining module is further configured to: before sending the first request message to the network device, send second indication information to the network device, where the second indication information indicates that an SL resource required by data or signaling corresponding to a destination address or a QoS flow is an SL resource corresponding to multicast or broadcast DRX.

Optionally, the first request message is any one of the following messages: an SL scheduling request SR, an SL buffer status report BSR, and a user assistance information UAI message.

When the first request message is any one of the following messages: an SL scheduling request SR, an SL buffer status report BSR, and a user assistance information UAI message, optionally, the second indication information is carried in a sidelink user information SUI message.

In an example manner, the first request message is a dedicated SL SR, and the first SL resource is allocated by the network device to the first terminal device based on the dedicated SL BSR.

In another example manner, when the first request message is the dedicated SL SR, before the obtaining module sends the dedicated SL SR to the network device, the obtaining module sends an SUI message to the network device, where the SUI message includes the second indication information, and the obtaining module receives the dedicated SL SR configured by the network device.

In still another example manner, when the first request message is an SL SR, the SL SR includes the second indication information. The first SL resource is allocated by the network device to the first terminal device based on the second indication information.

In an example manner, when the first request message is an SL BSR, the obtaining module is specifically configured to send the SL BSR to the network device by using a dedicated LCG or a dedicated destination address index. The first SL resource is allocated by the network device to the first terminal device based on the dedicated LCG or the dedicated destination address index, or is predefined in a protocol.

In another example manner, when the first request message is an SL BSR, before sending the SL BSR to the network device by using the dedicated LCG or the dedicated destination address, the obtaining module sends an SUI message to the network device, where the SUI message includes the second indication information, and receives configuration information that is of the dedicated LCG or the dedicated destination address index and that is sent by the network device, and the dedicated LCG or the dedicated destination address index is configured by the network device based on the second indication information.

In still another example manner, when the first request message is an SL BSR, the SL BSR includes the second indication information. The first SL resource is allocated by the network device to the first terminal device based on the second indication information.

In still another example manner, when the first request message is an SL BSR, before sending the SL BSR to the network device, the obtaining module sends an SUI to the network device, where the SUI includes the second indication information.

In still another example manner, when the first request message is an SL BSR in a specific format, the SL BSR in the specific format is specially for requesting an SL resource corresponding to multicast or broadcast DRX. The first SL resource is allocated by the network device to the first terminal device based on a format of the SL BSR.

In an example manner, when the first request message is a UAI message, the UAI message includes the second indication information. The first SL resource is allocated by the network device to the first terminal device based on the second indication information.

In another example manner, when the first request message is a UAI message, before sending the UAI message to the network device, the obtaining module sends an SUI message to the network device, where the SUI message includes the second indication information. The first SL resource is a semi-persistent scheduling SPS resource, and the first SL resource is allocated by the network device to the first terminal device based on the second indication information and the UAI message.

Optionally, the first signaling includes one or more pieces of the following signaling: a message in an SL unicast connection establishment process, a message in a relay UE discovery process, an SL capability related message of UE, and a first PC5 radio resource control RRC reconfiguration message.

In another example manner, the obtaining module is specifically configured to obtain the first SL resource by measuring an idle SL resource.

In an example manner, the sending module is specifically configured to only select or preferentially select, from to-be-transmitted destination addresses, a destination address corresponding to the first data or the first signaling as a destination address for transmission.

In another example manner, the sending module is specifically configured to only select or preferentially select, from to-be-transmitted logical channels, a logical channel corresponding to the first data or the first signaling as a logical channel for transmission.

The first terminal device provided in the sixth aspect and the implementations of this application may be configured to perform the method provided in the first aspect and the implementations of this application. Technical effects are similar, and details are not described herein again.

A seventh aspect of this application provides a network device, including:
a receiving module, configured to receive a first request message sent by a first terminal device, where the first request message is for requesting a first sidelink SL resource, the first SL resource is an SL resource corresponding to first discontinuous reception DRX, and the first DRX is multicast or broadcast DRX; and
an allocation module, configured to allocate the first SL resource to the first terminal device based on the first request message.

In an example manner, the first request message includes second indication information, and the second indication information indicates that an SL resource required by data or signaling corresponding to a destination address or a QoS flow is an SL resource corresponding to multicast or broadcast DRX.

In another example manner, the receiving module is further configured to: before receiving the first request message, receive second indication information sent by the first terminal device, where the second indication information indicates that an SL resource required by data or signaling corresponding to a destination address or a QoS flow is an SL resource corresponding to multicast or broadcast DRX.

Optionally, the first request message is any one of the following messages: an SL scheduling request SR, an SL buffer status report BSR, and a user assistance information UAI message.

When the first request message is any one of the following messages: an SL scheduling request SR, an SL buffer status report BSR, and a user assistance information UAI message, optionally, the second indication information is carried in a sidelink user information SUI message.

In an example manner, the first request message is a dedicated SL SR, the dedicated SL SR is for requesting an SL resource corresponding to multicast or broadcast SL DRX, and the allocation module is specifically configured to: determine, based on the dedicated SL SR, that a resource requested by the SL SR is a resource corresponding to multicast or broadcast SL DRX, and allocate the first SL resource to the first terminal device.

In another example manner, before receiving the dedicated SL SR, the receiving module further receives an SUI message sent by the first terminal device, where the SUI message includes the second indication information, and the network device further includes a configuration module, configured to configure the dedicated SL SR for the first terminal device based on the second indication information.

In still another example manner, when the first request message is an SL SR, the SL SR includes the second indication information, and the allocation module is specifically configured to allocate the first SL resource to the first terminal device based on the second indication information.

In an example manner, when the first request message is an SL BSR, the SL BSR is sent by the first terminal device to the network device by using a dedicated LCG or a dedicated destination address index. The allocation module is specifically configured to: determine, based on the dedicated LCG or the dedicated destination address index, that the resource requested by the SL BSR is a resource corresponding to multicast or broadcast SL DRX, and allocate the first SL resource to the first terminal device.

In another example manner, when the first request message is an SL BSR, before receiving the SL BSR, the receiving module further receives an SUI message sent by the first terminal device, where the SUI message includes the second indication information, and the allocation module is specifically configured to configure the dedicated LCG or the dedicated destination address index for the SL BSR based on the second indication information and the SL BSR.

In still another example manner, when the first request message is an SL BSR, the SL BSR includes the second indication information. The network device allocates the first SL resource to the first terminal device based on the second indication information.

In still another example manner, when the first request message is an SL BSR, before the network device receives the SL BSR, the network device receives an SUI message sent by the first terminal device. The SUI includes second indication information. The network device further includes a configuration module, configured to allocate the first SL resource to the first terminal device based on the second indication information.

In still another example manner, the first request message is an SL BSR in a specific format, and the SL BSR in the specific format is specially for requesting an SL resource corresponding to multicast or broadcast DRX. The allocation module is specifically configured to allocate the first SL resource to the first terminal device based on the format of the SL BSR.

In an example manner, when the first request message is a UAI message, the UAI message includes the second indication information. The allocation module is specifically configured to allocate the first SL resource to the first terminal device based on the second indication information.

In another example manner, when the first request message is a UAI message, before receiving the UAI message, the receiving module receives an SUI message sent by a first network device, where the SUI message includes the second indication information. The allocation module is specifically configured to allocate the first SL resource to the first terminal device based on the second indication information and the UAI message, where the first SL resource is a semi-persistent scheduling SPS resource.

Optionally, the first signaling includes one or more pieces of the following signaling: a message in an SL unicast connection establishment process, a message in a relay UE discovery process, an SL capability related message of UE, and a first PC5 radio resource control RRC reconfiguration message.

The network device provided in the seventh aspect and the implementations of this application may be configured to perform the method provided in the second aspect and the implementations of this application. Technical effects are similar, and details are not described herein again.

An eighth aspect of this application provides a second terminal device, including:
a receiving module, configured to receive first indication information from an upper layer of the second terminal device, where the first indication information indicates that first data or first signaling supports first discontinuous reception DRX, and the first DRX is multicast or broadcast SL DRX;
a determining module, configured to determine, based on the first indication information, that currently to-be-received data or signaling supports the first DRX; and
an activation module, configured to activate the first DRX.

The second terminal device provided in the eighth aspect of this application may be configured to perform the method provided in the third aspect of this application, and technical effects are similar. Details are not described herein again.

A ninth aspect of this application provides a terminal device, including:
a deactivation module, configured to deactivate first discontinuous reception DRX at a first moment, where the first DRX is multicast or broadcast sidelink SL DRX, and the first moment is a receiving moment of an SL unicast connection establishment message or a receiving moment of a discovery request message; and
an activation module, configured to activate the first DRX at a second moment, where the second moment is a receiving moment of an SL unicast connection establishment accept message, a receiving moment of a first PC5 radio resource control RRC reconfiguration message, a completion moment of unicast connection DRX configuration, or a timeout moment of a first timer.

In an example manner, the terminal device starts the first timer at the first moment.

In an example manner, the deactivation module is specifically configured to deactivate the first DRX after a preset time is delayed at the first moment.

The terminal device provided in the eighth aspect and the implementations of this application may be configured to perform the method provided in the fourth aspect and the implementations of this application. Technical effects are similar, and details are not described herein again.

A tenth aspect of this application provides a second terminal device, including:
a receiving module, configured to receive SCI sent by a first terminal device; and
the receiving module being further configured to: when the second terminal device is in a multicast or broadcast SL DRX state and a resource corresponding to a TB indicated by the SCI does not belong to or partially belongs to an SL resource corresponding to multicast or broadcast SL DRX, skip receiving the TB indicated by the SCI, or receive the TB indicated by the SCI, but skip starting a HARQ RTT timer or an inactivity timer corresponding to the SCI.

The second terminal device provided in the tenth aspect of this application may be configured to perform the method provided in the fifth aspect of this application, and technical effects are similar. Details are not described herein again.

An eleventh aspect of this application provides a terminal device, including a processor, a memory, and a transceiver. The memory is configured to store instructions. The transceiver is configured to communicate with another device. The processor is configured to execute the instructions stored in the memory, so that the terminal device performs any method provided in the first aspect, the third aspect, the fourth aspect, the fifth aspect, and the implementations of this application.

A twelfth aspect of this application provides a network device, including a processor, a memory, and a transceiver. The memory is configured to store instructions. The transceiver is configured to communicate with another device. The processor is configured to execute the instructions stored in the memory, so that the network device performs any method provided in the second aspect and the implementations of this application.

A thirteenth aspect of this application provides a computer-readable storage medium. The computer-readable storage medium stores instructions. When then the instructions are executed, a computer is enabled to perform any method provided in the first aspect, the third aspect, the fourth aspect, the fifth aspect, and the implementations of this application.

A fourteenth aspect of this application provides a computer-readable storage medium. The computer-readable storage medium stores instructions. When the instructions are executed, a computer is enabled to perform any method provided in the second aspect and the implementations of this application.

A fifteenth aspect of this application provides a computer program product. The computer program product includes instructions. When the instructions are executed, a computer is enabled to perform any method provided in the first aspect, the third aspect, the fourth aspect, the fifth aspect, and the implementations of this application.

A sixteenth aspect of this application provides a computer program product. The computer program product includes instructions. When the instructions are executed, a computer is enabled to perform any method provided in the second aspect and the implementations of this application.

A seventeenth aspect of this application provides a communication system, including a first terminal device, a second terminal device, and a network device. The first terminal device is configured to perform any method provided in the first aspect and the implementations of this application. The second terminal device is configured to perform the method provided in the third aspect of this application. The network device is configured to perform any method provided in the second aspect and the implementations of this application.

According to the sidelink communication method and the apparatus provided in embodiments of this application, when the first terminal device (the transmitting end) has to-be-sent first data or first signaling, the first terminal device first determines whether the first data or the first signaling supports multicast or broadcast SL DRX. When the first data or the first signaling supports multicast or broadcast SL DRX, the first terminal device obtains an SL resource corresponding to multicast or broadcast SL DRX, and sends the first data or the first signaling by using the SL resource corresponding to multicast or broadcast SL DRX. The SL resource used by the transmitting end to send the first data or the first signaling is an SL resource corresponding to multicast or broadcast SL DRX, and the receiving end terminal device also receives the first data or the first signaling on an SL resource corresponding to multicast or broadcast SL DRX. Therefore, it can be ensured that the receiving end terminal device can successfully receive the first data or the first signaling that supports multicast or broadcast SL DRX, thereby improving SL communication quality.

### BRIEF DESCRIPTION OF DRAWINGS

FIG. 1 is a schematic diagram of a network architecture to which this application is applicable;
FIG. 2 is a schematic diagram of a unicast connection establishment process of SL DRX;
FIG. 3 is a schematic diagram of an SL resource used for multicast or broadcast SL DRX;
FIG. 4 is another schematic diagram of an SL resource used for multicast or broadcast SL DRX;
FIG. 5 is a flowchart of a sidelink communication method according to Embodiment 1 of this application;
FIG. 6 is a flowchart of a sidelink communication method according to Embodiment 2 of this application;
FIG. 7 is a flowchart of signaling of a sidelink communication method according to Embodiment 3 of this application;
FIG. 8 is a flowchart of signaling of a sidelink communication method according to Embodiment 4 of this application;
FIG. 9 is a flowchart of signaling of a sidelink communication method according to Embodiment 5 of this application;
FIG. 10 is a schematic diagram of an SL resource of a terminal device;
FIG. 11 is a schematic diagram of sending data by a terminal device;
FIG. 12 is a flowchart of a sidelink communication method according to Embodiment 6 of this application;
FIG. 13 is a schematic diagram of a structure of a first terminal device according to Embodiment 7 of this application;
FIG. 14 is a schematic diagram of a structure of a network device according to Embodiment 8 of this application;
FIG. 15 is a schematic diagram of a structure of a second terminal device according to Embodiment 9 of this application;
FIG. 16 is a schematic diagram of a structure of a second terminal device according to Embodiment 10 of this application; and
FIG. 17 is a schematic diagram of a structure of a terminal device according to Embodiment 11 of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence. For example, "first" in a first device and "second" in a second device in embodiments of this application are merely used to distinguish between different devices.

It should be noted that, in this application, terms "for example" or "such as" are used to represent giving an example, an illustration, or a description. Any embodiment or design scheme described as an "example" or "for example" in this application should not be explained as being more preferred or having more advantages than another embodiment or design scheme. Exactly, use of the terms such as "for example" or "example" is intended to present a related concept in a specific manner.

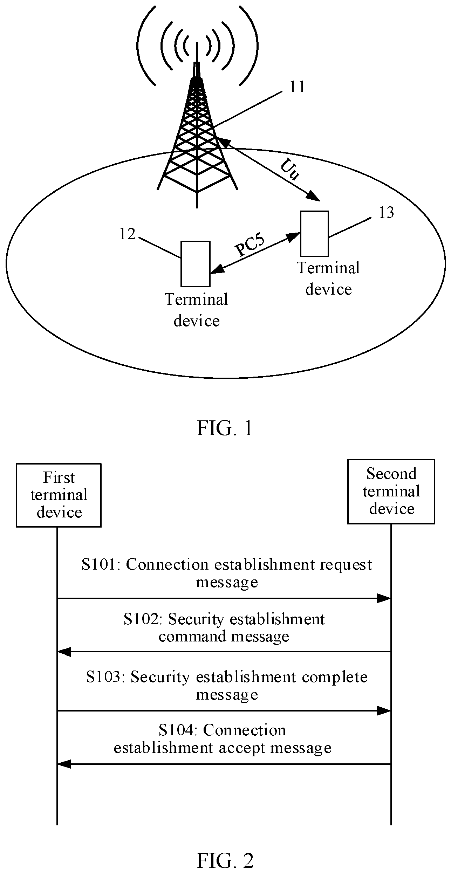

FIG. 1 is a schematic diagram of a network architecture to which this application is applicable. As shown in FIG. 1, the network architecture includes a network device (for example, a base station) 11, a first terminal device 12, and a second terminal device 13. The network device 11 communicates with the first terminal device 12 and the second terminal device 13 through a Uu air interface. The first terminal device 12 communicates with the second terminal device 13 through a PC5 air interface. The communication through the PC5 interface is also referred to as SL communication. FIG. 1 is merely an example for description, and does not constitute a limitation. The network architecture may further include more network devices and terminal devices.

In a scenario of the SL communication, the first terminal device 12 and the second terminal device 13 may be located within coverage of a same base station (for example, the base station 11), or may be located within coverage of different base stations. Alternatively, one terminal device is located within coverage of a base station, and the other terminal device is located out of coverage of the base station. Alternatively, both the terminal devices are located out of coverage (out of coverage) of the base station. One transmitting end terminal device may perform SL communication with one or more receiving end terminal devices. From a perspective of the receiving end terminal device, one receiving end device may also perform SL communication with one or more transmitting end terminal devices.

The terminal device in embodiments of this application is also referred to as a terminal (terminal), user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device may be a station (station, ST) in a wireless local area network (wireless local area network, WLAN), or may be a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a computing device, or another processing device connected to a wireless modem, a wearable device, an in-vehicle device, a road side unit (road side unit, RSU), and a next-generation communication system, for example, a terminal device in a fifth generation (5-generation, in a 5G) network, a terminal device in a future evolved public land mobile Network (public land mobile network, PLMN) network, a terminal device in a new radio (new radio, NR) communication system, or the like.

The network device in embodiments of this application may be referred to as an access network device, a base station, or the like. The base station may be an access point (access point, AP) in a WLAN, a base transceiver station (base transceiver station, BTS) in a global system for mobile communication (global system for mobile communication, GSM) or code division multiple access (code division multiple access, CDMA), or may be a NodeB (NodeB, NB) in WCDMA, or may be an evolved NodeB (evolved nodeB , eNB, or eNodeB) in LTE, or a relay station or an access point, a new generation NodeB (new generation nodeB, gNodeB) in an NR system, or the like. Optionally, the gNodeB may be deployed in a form that a central unit (central unit, CU) and a distributed unit (distributed unit, DU) are separate.

A typical application of SL communication is V2X communication. For example, the V2X communication includes vehicle-to-vehicle communication (vehicle-to-vehicle, V2V), vehicle-to-infrastructure communication (vehicle-to-infrastructure, V2I), vehicle to people communication (vehicle to people, V2P), vehicle-to-application server communication (vehicle-to-network, V2N), and the like. A specific communication scenario of V2X is not limited in embodiments of this application. For example, the V2X communication may be vehicle-to-vehicle communication, or may be communication between in-vehicle devices, or may be communication between an RSU and an in-vehicle device and/or a network device, or may be communication between a network device and an in-vehicle device and/or an RSU. The network device may be an LTE base station device, an NR base station device, or a base station in a subsequent evolved system.

In a V2X scenario, a terminal device supports unicast, multicast, or broadcast communication. A unicast connection needs to be established for unicast communication, and a multicast communication group needs to be established for multicast communication. For example, in a vehicle platooning (platooning) service, vehicles that have a same moving direction and a relatively close distance may form a vehicle platoon, and one vehicle in the vehicle platoon may send data to another vehicle in the vehicle platoon. Further, a lead vehicle may establish a unicast communication connection to a member vehicle, and perform one-to-one data transmission with the member vehicle through the unicast connection.

Before performing SL transmission, the transmitting end terminal device needs to obtain a transmission resource. In embodiments of this application, the transmission resource used for SL communication is referred to as an SL resource. To distinguish between an uplink transmission resource and a downlink data resource in the conventional technology, the SL resource is also referred to as an SL grant (SL grant). Correspondingly, before performing receiving, the receiving end terminal device also needs to determine a receiving resource. Currently, the transmitting end terminal device may obtain the SL resource in the following two modes (model).

Mode 1: A base station scheduling manner. The base station scheduling manner is similar to a manner of obtaining an uplink resource on a Uu interface. When SL data is to be transmitted, the terminal device first reports a sidelink buffer status report (sidelink buffer status report, SL BSR) to the base station, to notify the base station of an amount of data to be sent. The base station may allocate an SL resource of a corresponding size to the terminal device from an SL transmission resource pool (Tx resource pool) based on the SL BSR. For a periodic service, the terminal device may report an attribute of the periodic service to the base station. The base station allocates a periodic SL resource to the terminal device based on the attribute of the periodic service. The attribute of the periodic service includes a start time, a period, a packet size, and the like. The terminal device to which the periodic SL resource is allocated does not need to frequently send the SL BSR to obtain the SL resource.

Mode 2: In a terminal device autonomous contention manner, the terminal device may select an idle (that is, unoccupied) SL resource for transmission by measuring whether each time-frequency resource in the SL transmission resource pool is occupied, and the base station does not need to schedule the SL resource.

The SL transmission resource pool includes a plurality of SL resources (for example, time-frequency resources). When scheduling an SL resource for the terminal device, the base station may select a resource from the SL transmission resource pool. Similarly, when autonomously selecting an SL resource, the terminal device also selects a resource from the SL transmission resource pool. The SL transmission resource pool may be configured by the base station for the terminal device. It may be understood that one or more SL transmission resource pools may exist.

Similarly, when the terminal device is used as a receiving end to perform SL communication, the terminal device also needs to determine a corresponding SL receiving resource from an SL receiving resource pool (Rx resource pool). It may be understood that SL resources in the sending resource pool correspond to SL resources in the receiving resource pool, and one or more SL receiving resource pools may exist.

In an existing communication protocol, for a service of interest, a receiving end terminal device needs to monitor sidelink control information (sidelink control information, SCI) at moments corresponding to all SL resources in a resource pool, to receive a message sent by a possible transmitting end terminal device. However, the transmitting end terminal device may not send data in most of the time, which is therefore not conducive to energy saving of the receiving end terminal device.

In the conventional technology, the receiving end terminal device may use a DRX mechanism to save energy. The receiving end terminal device receives downlink control information (downlink control information, DCI) only in an active time of DRX, does not receive DCI in a sleep time of DRX, and a receiver of the receiving end terminal device is in an off state in the sleep time of DRX, thereby achieving an objective of energy saving.

A DRX mechanism, which is referred to as SL DRX below, is also introduced in SL communication. A receiving end terminal device that supports SL DRX receives SCI only in an active time of SL DRX, and disables a receiver in a sleep time of SL DRX and does not receive SCI. SL DRX includes unicast SL DRX and multicast or broadcast SL DRX. Before using unicast SL DRX, the terminal device needs to first establish a unicast connection (PC5-S connection/unicast link), and then configure a corresponding SL DRX parameter through the established unicast connection.

For a process of establishing a unicast connection of SL DRX, refer to the process shown in FIG. 2. As shown in FIG. 2, the process of establishing a unicast connection includes the following steps.

S101: A first terminal device sends a connection establishment request message to a second terminal device.

The connection establishment request message is for requesting to establish a unicast connection. The connection establishment request is also referred to as a PC5-S connection establishment request message. The connection establishment request message may be a direct communication request message.

S102: The second terminal device sends a security establishment command message to the first terminal device.

S103: The first terminal device sends a security establishment complete message to the second terminal device.

S104: The second terminal device sends a connection establishment accept message to the first terminal device.

The security establishment command message may be a direct security mode command message. The security establishment complete message may be a direct security mode complete message. The connection establishment accept message may be a direct communication accept message. The connection establishment request message may be sent in a unicast or broadcast manner. The security establishment command message, the security establishment complete message, and the connection establishment accept message are all sent in a unicast manner.

In the process of establishing a unicast connection, corresponding security is also established. In addition, a corresponding PC5-RRC connection automatically exists after the unicast connection is established. Security may be established by an upper layer (for example, a PC5-S layer or a V2X layer) of a terminal device. After establishing security, the upper layer notifies an access (access, AS) layer of a security configuration. The security configuration includes a security algorithm, a security parameter, a security policy, and the like. The AS layer may perform security protection on a PC5-S message, a PC5-RRC message, and user plane data transmission by using the security configuration.

In a scenario of relay communication, before establishing a unicast connection, terminal devices first discover each other by using a discovery (discovery) mechanism. The terminal devices may be classified into a relay (relay) terminal device and a remote (remote) terminal device. The relay terminal device is always within coverage of a base station and can directly communicate with the base station. The remote terminal device may be within coverage of the base station, or may be out of coverage of the base station. To directly transmit data to a network, the remote terminal device needs to discover and connect to a relay terminal device.

Currently, two discovery modes exist between terminal devices. In a discovery mode A, a relay terminal device broadcasts an announcement message to the surrounding, to notify surrounding remote terminal devices that "I am here, and you can find me". In a discovery mode B, a remote terminal device sends a solicitation message to query whether a relay terminal device exists nearby. After receiving the solicitation message, a relay terminal device determines, based on a status of the relay terminal device or another factor, whether to return a response message. If a relay terminal device returns a response message, two terminal devices discover each other.

To support multicast or broadcast SL DRX, an SL resource (or referred to as an SL resource corresponding to multicast or broadcast SL DRX) used for multicast or broadcast SL DRX needs to be configured. The SL resource used for multicast or broadcast SL DRX may be configured in the following two manners. It may be understood that the SL resource herein includes an SL receiving resource or an SL transmission resource.

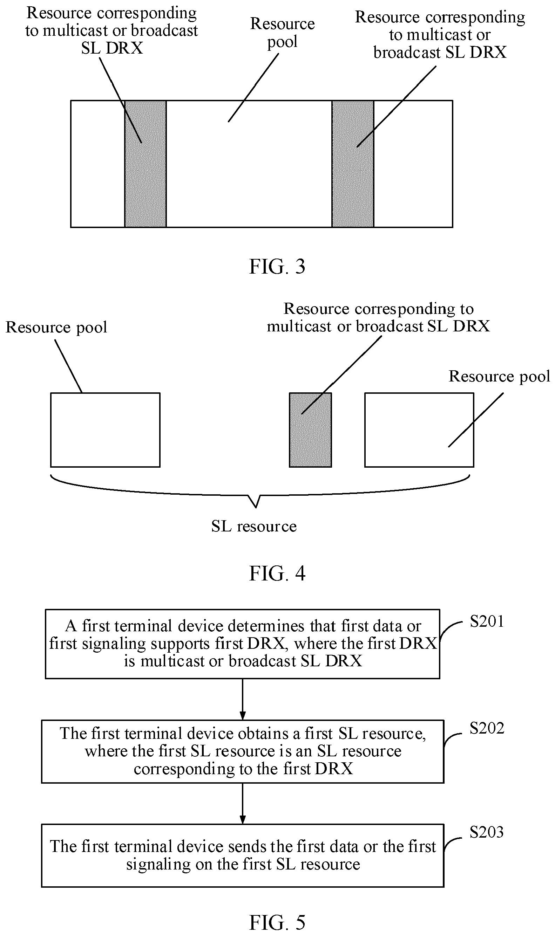

Manner 1: Some patterns (which may also be referred to as subsets) are captured from an existing resource pool (for example, an R16 resource pool) for multicast or broadcast SL DRX. FIG. 3 is a schematic diagram of an SL resource used for multicast or broadcast SL DRX. As shown in FIG. 3, a gray part represents a captured pattern. A network device may define or configure a time-frequency domain position, a period, and the like of a pattern resource, and notify a terminal device of the time-frequency domain position, the period, and the like, or a protocol predefines a time-frequency domain position, a period, and the like of the pattern resource. It may be understood that more discontinuous pattern resources may exist in the resource pool, and the terminal device that supports multicast or broadcast SL DRX may send or receive data on an SL resource shown in the gray part, to ensure that a multicast or broadcast service can be normally transmitted.

Manner 2: A dedicated resource pool (dedicated resource pool) is configured for multicast or broadcast SL DRX. FIG. 4 is another schematic diagram of an SL resource used for multicast or broadcast SL DRX. A gray part represents a dedicated resource pool. The dedicated resource pool is used for multicast or broadcast SL DRX. An existing resource pool is independent of the dedicated resource pool. The terminal device that supports multicast or broadcast SL DRX may send or receive, on the dedicated resource pool shown in the gray part, data or signaling that supports multicast or broadcast SL DRX, to ensure that the data or signaling that supports multicast or broadcast SL DRX can be normally transmitted.

The resource pool in Manner 1 and Manner 2 may be a sending resource pool or a receiving resource pool.

When a receiving end terminal device determines that multicast or broadcast SL DRX is supported, the receiving end terminal device listens to SCI only in an active time of multicast or broadcast SL DRX, and the transmitting end terminal device may send data or signaling at any time. If the data or signaling sent by the transmitting end terminal device is not at a time-frequency position corresponding to the active time of multicast or broadcast SL DRX, the receiving end terminal device cannot receive the data or the signaling sent by the transmitting end, resulting in a miss of the data or the signaling. If the data or signaling sent by the transmitting end terminal device is data or signaling that supports broadcast or multicast SL DRX, a miss of the data or signaling that supports broadcast or multicast SL DRX affects communication quality of the terminal device.

In embodiments of this application, the data or signaling that supports broadcast or multicast SL DRX is also referred to as data or signaling that cannot be missed (miss), or data or signaling that cannot be discarded, or is referred to as important data or signaling, or is referred to as data or signaling that needs to be received or sent on an SL resource corresponding to broadcast or multicast SL DRX, or is referred to as data or signaling of a specific version (for example, R17). The data and the signaling may also be collectively referred to as information (information). Therefore, the data or the signaling that supports broadcast or multicast SL DRX is also referred to as information that supports broadcast or multicast SL DRX.

The data or signaling that supports multicast or broadcast SL DRX includes a service that supports multicast or broadcast SL DRX or a QoS flow (QoS flow) that supports multicast or broadcast SL DRX. The QoS flow is data with a smaller or finer granularity than that of the service (that is, one service may include one or more QoS flows).

In embodiments of this application, the signaling that supports multicast or broadcast SL DRX includes one or more pieces of the following signaling: four messages (with reference to the four messages shown in FIG. 2) in a process of establishing a unicast connection, a message in a discovery process, an SL capability related message of the terminal device, and a first PC5 RRC reconfiguration message. The four messages in the process of establishing a unicast connection are: a connection establishment request message, a security establishment command message, a security establishment complete message, and a connection establishment accept message shown in FIG. 2. The messages in the discovery process include the announcement message, the solicitation message, and the response message of the solicitation message. The SL capability related message of the terminal device includes a UECapabilityEnquirySidelink message and a UECapabilityInformationSidelink message.

To resolve the problem in the conventional technology, in embodiments of this application, a core network device or a V2X application server may indicate that the terminal device supports data or signaling of multicast or broadcast SL DRX, or indicate, to the terminal device, data or signaling that supports multicast or broadcast SL DRX. When the transmitting end terminal device has data to be sent, the transmitting end terminal device determines whether to-be-sent data or signaling is data or signaling that supports multicast or broadcast SL DRX. If the to-be-sent data or signaling is data or signaling that supports multicast or broadcast SL DRX, the transmitting end terminal device sends, by using an SL resource corresponding to multicast or broadcast DRX, the data or signaling that supports multicast or broadcast SL DRX. The receiving end terminal device receives, on an SL resource corresponding to multicast or broadcast DRX, the data or signaling that supports multicast or broadcast SL DRX. Because a sending resource used by the transmitting end terminal device corresponds to a receiving resource used by the receiving end terminal. That is, both the sending resource and the receiving resource are SL resources corresponding to multicast or broadcast DRX, it can be ensured that data or signaling that supports multicast or broadcast SL DRX can be successfully received by the receiving end device without affecting quality of SL communication.

The data or signaling that supports multicast or broadcast SL DRX may be indicated by the core network device or the V2X application server, or may be preconfigured in the terminal device. This is not limited in this embodiment. The data that supports multicast or broadcast SL DRX includes a multicast or broadcast SL DRX service or a QoS flow. The core network device or the V2X application server may indicate a service type that supports multicast or broadcast SL DRX, information about a QoS flow, a destination address, or the like. The information about the QoS flow may be an identifier (PC5 QoS flow identifier, PFI) of the QoS flow.

In this embodiment, the core network device or the V2X application server may send first indication information to the terminal device. The first indication information indicates whether the data or the signaling supports multicast or broadcast SL DRX. The upper layer of the terminal device receives the first indication information from the core network device or the V2X application server, and sends the first indication information to the AS layer. The upper layer of the terminal device may be understood as a layer between an application layer and the AS layer. The upper layer includes a PC5-S layer or a V2X layer. The AS layer of the terminal device includes one or more of the following layers: a physical layer (physical), a media access control (media access control, MAC) layer, a radio link control (radio link control, RLC) layer, a packet data convergence protocol (packet data convergence protocol, PDCP) layer, a service data adaptation protocol (service data adaptation protocol, SDAP) layer, and a radio resource control (radio resource control, RRC) layer.

When the core network device or the V2X application server indicates, to the terminal device, whether the data supports multicast or broadcast SL DRX or when the upper layer of the terminal device indicates, to the AS layer, whether the data supports multicast or broadcast SL DRX, whether each service type/destination address/QoS flow supports multicast or broadcast SL DRX may be indicated, or only a service type/destination address/QoS flow that supports multicast or broadcast SL DRX may be indicated. The QoS flow is data with a finer or smaller granularity than that of the service. When whether the service supports multicast or broadcast SL DRX is indicated, the QoS flow may indicate whether data corresponding to the service type or the destination address supports multicast or broadcast SL DRX. It may be understood that the destination address may be obtained by converting a service type.

One destination address or service may correspond to or be associated with a plurality of QoS flows. Some QoS flows in a plurality of QoS flows corresponding to one destination address may support multicast or broadcast SL DRX, and the other QoS flows may not support multicast or broadcast SL DRX. Therefore, when the core network device or the V2X application server indicates, to the terminal device, whether a QoS flow supports multicast or broadcast SL DRX, or when the upper layer of the terminal device indicates, to the AS layer, whether a QoS flow supports multicast or broadcast SL DRX, whether each QoS flow associated with the destination address supports multicast or broadcast SL DRX may be indicated, or which QoS flows associated with the destination address support multicast or broadcast SL DRX may be indicated.

When the core network device or the V2X application server indicates, to the terminal device, whether signaling supports multicast or broadcast SL DRX, or when the upper layer of the terminal device indicates, to the AS layer, whether signaling supports multicast or broadcast SL DRX, whether signaling of each type/signaling corresponding to each destination address supports multicast or broadcast SL DRX may be indicated, or whether signaling of a specific name supports multicast or broadcast SL DRX may be indicated.

When the upper layer of the terminal device indicates, to the AS layer, whether multicast or broadcast SL DRX is supported, the indicated granularity is understood as a granularity of the terminal device.

FIG. 5 is a flowchart of a sidelink communication method according to Embodiment 1 of this application. As shown in FIG. 5, the method provided in this embodiment includes the following steps.

S201: A first terminal device determines that first data or first signaling supports first DRX, where the first DRX is multicast or broadcast SL DRX.

The first terminal device is a transmitting end, and the first data or the first signaling is currently to-be-sent data or signaling. When first data or first signaling is to be sent, the first terminal device determines whether the first data or the first signaling supports the first DRX.

For example, the first terminal device determines, based on first indication information, that the first data or the first signaling supports the first DRX, and the first indication information indicates that the first data or the first signaling supports multicast or broadcast SL DRX. The first indication information may be sent by a core network device or a V2X application server to an upper layer of the first terminal device. The upper layer of the first terminal device sends the first indication information to an AS layer. The AS layer of the first terminal device determines, based on the first indication information, whether the first data or the first signaling supports the first DRX.

Optionally, the first indication information includes: a service or a QoS flow associated with the first data supports multicast or broadcast SL DRX. When the first indication information indicates that the service associated with the first data supports multicast or broadcast SL DRX, a service type or a destination address associated with the first data may be indicated to support multicast or broadcast SL DRX.

In an implementation, when determining whether the first signaling supports the first DRX, the first terminal device may not use the first indication information, and the first terminal device determines, according to a policy of the first terminal device, signaling that supports the first DRX. In another implementation, the first terminal device may determine, with reference to the first indication information, whether the first signaling supports the first DRX. For example, the first terminal device determines, according to a policy of the first terminal device, that the first signaling is alternative signaling that supports the first DRX, and further determines whether a destination address of the signaling is a destination address indicated in the first indication information. If the destination address of the signaling is the destination address indicated in the first indication information, the first terminal device determines that the first signaling supports the first DRX.

Optionally, the first terminal device determines, according to a policy of the first terminal device, signaling that supports the first DRX, or determines, according to a rule predefined in a protocol, signaling that supports the first DRX.

Optionally, the first terminal device may determine, based on a granularity of a terminal device, that the first terminal device supports the first DRX. It may be understood that the upper layer of the first terminal device indicates that the AS layer of the first terminal device supports the first DRX, and an indicated granularity is the granularity of the terminal device.

S202: The first terminal device obtains a first SL resource, where the first SL resource is an SL resource corresponding to the first DRX.

After the first terminal device determines that the first data or the first signaling supports the first DRX, the first terminal device obtains a resource corresponding to multicast or broadcast SL DRX used for transmitting the first data or the first signaling, that is, the first SL resource.

The first terminal device may obtain the first SL resource in a model manner (that is, a manner of scheduling by a base station). Specifically, the first terminal device sends a first request message to a network device, where the first request message is for requesting the first SL resource. The first terminal device receives information about the first SL resource sent by the network device. The network device may be a base station. The base station allocates the first SL resource to the first terminal device based on a format and a type of the first request message or content in the first request message.

Alternatively, the first terminal device may obtain the first SL resource in a mode 2 manner (that is, a manner in which the terminal device autonomously selects a resource). Specifically, the first terminal device obtains the first SL resource by measuring an idle SL resource. For example, the first terminal device may measure, in a sensing manner, whether the SL resource is idle, and determine a finally available first SL resource through resource exclusion.

When obtaining the first SL resource in a manner of scheduling by the base station, the first terminal device needs to learn, by using the first request message, that the resource requested by the first terminal device is a resource corresponding to multicast or broadcast SL DRX.

In a first implementation, the first request message includes second indication information, and the second indication information indicates that an SL resource required by data or signaling corresponding to a destination address or a QoS flow is an SL resource corresponding to multicast or broadcast SL DRX. After receiving the first request message, the base station allocates, to the first terminal device based on the second indication information included in the first request message, an SL resource corresponding to multicast or broadcast DRX.

In embodiments of this application, the SL resource required by the data or the signaling corresponding to the destination address or the QoS flow may be understood as an SL resource used or required or to be used by the data or the signaling corresponding to the destination address or the QoS flow.

In a second implementation, before sending the first request message to the base station, the first terminal device first sends second indication information to the base station, where the second indication information indicates that an SL resource required by data or signaling corresponding to a destination address or a QoS flow is an SL resource corresponding to multicast or broadcast DRX. The base station allocates, to the first terminal device based on the first request message and the second indication information, an SL resource corresponding to multicast or broadcast DRX.

In a third implementation, the first terminal device sends the first request message to the base station by using a dedicated LCG or a dedicated destination address index, and the base station determines, based on the dedicated LCG or the dedicated destination address index used for sending the first request message, that the resource requested by the first terminal device is an SL resource corresponding to multicast or broadcast DRX. Alternatively, the first terminal device sends the first request message in a specific format to the base station. The base station determines, based on a format of the first request message, that the resource requested by the first terminal device is an SL resource corresponding to multicast or broadcast DRX. Alternatively, if the first request message is a dedicated SR, the base station determines, based on the dedicated SR, that the resource requested by the first terminal device is an SL resource corresponding to multicast or broadcast DRX.

It should be noted that, in embodiments of this application, the second indication information is associated with the destination address or the QoS flow. When the second indication information is associated with the destination address, the second indication information indicates that an SL resource required by data or signaling corresponding to the destination address is an SL resource corresponding to multicast or broadcast DRX. When the second indication information is associated with the QoS flow, the second indication information indicates that an SL resource required by data or signaling corresponding to the QoS flow is an SL resource corresponding to multicast or broadcast DRX.

Optionally, the second indication information may alternatively indicate that an SL resource required by the data or the signaling corresponding to the first terminal device is an SL resource corresponding to multicast or broadcast SL DRX. In other words, the second indication information has a granularity of a terminal device.

Optionally, the first request message is any one of the following messages: an SL scheduling request (scheduling request, SR), an SL BSR, and a UAI message. Correspondingly, in the second implementation, the second indication information may be carried in an SUI message.

### (1) The first request message is an SL SR.

In an example manner, the first terminal device sends a dedicated SL SR to the base station. After receiving the dedicated SL SR, the base station determines, based on the dedicated SL SR, that the resource requested by the first terminal device is an SL resource corresponding to multicast or broadcast SL DRX. The dedicated SL SR may be understood as an SR sent on a dedicated sending resource.

The dedicated SL SR may be preconfigured by the base station or another network device for the first terminal device, or may be predefined in a protocol. For the first terminal device, the SL SR may be classified into two types: a common SL SR and a dedicated SL SR. The dedicated SL SR is for requesting an SL resource corresponding to multicast or broadcast DRX. The common SL SR is for requesting another SL resource other than an SL resource corresponding to multicast or broadcast DRX or a nonlimited SL resource. The base station may determine, based on the type of the SL SR, whether the resource requested by the first terminal device is an SL resource corresponding to multicast or broadcast DRX.

For example, an SR ID corresponding to the dedicated SL SR is predefined in a protocol. When the first terminal device sends the SL SR to the network device on the resource corresponding to the SR ID, the network device may learn, based on the resource or the SR ID, that the first terminal device requests a sidelink transmission resource corresponding to multicast or broadcast SL DRX, to configure a corresponding sidelink transmission resource for the first terminal device.

In another implementation, before sending the dedicated SL SR to the base station, the first terminal device first requests the base station to configure the dedicated SL SR. Before requesting the base station to configure the SL SR, the first terminal device sends the second indication information to the base station. The base station configures the dedicated SL SR for the first terminal device based on the second indication information. That the base station configures the dedicated SL SR may be understood as that a dedicated sending resource is configured for the SL SR.

For example, the first terminal device sends an SUI message to the base station, where the SUI message includes a destination address and a QoS flow corresponding to the destination address. Different from the conventional technology, in this embodiment, the SUI message further includes the second indication information. After receiving the SUI message, the base station allocates, based on the second indication information included in the SUI message, the dedicated SL SR to the first terminal device. In other words, the base station may configure a dedicated SL SR for the destination address corresponding to the second indication information or an LCH (logical channel) associated with the QoS flow. It may be understood that, the network configures the SR ID corresponding to the dedicated SL SR, when the first terminal device sends the SL SR to the network device on the resource corresponding to the SR ID, the network device may learn, based on the resource or the SR ID, that the first terminal device requests a sidelink transmission resource corresponding to multicast or broadcast SL DRX, to configure a corresponding sidelink transmission resource for the first terminal device.

In still another example manner, the SL SR includes the second indication information, and the base station determines, based on the second indication information, that the resource requested by the first terminal device is an SL resource corresponding to multicast or broadcast DRX. In this manner, a dedicated SL SR does not need to be defined, and all normal SL SRs or common SL SRs may include the second indication information.

### (2) The first request message is an SL BSR.

In an example manner, the first terminal device may send an SL BSR to the base station by using a dedicated logical channel group (logical channel group, LCG). After receiving the SL BSR, the base station determines, based on the LCG that sends the SL BSR, that the resource requested by the first terminal device is an SL resource corresponding to multicast or broadcast DRX.

The dedicated LCG (for example, a dedicated logical channel group identifier) for sending the SL BSR may be preconfigured by the base station or another network device for the first terminal device, or may be predefined in a protocol. For the first terminal device, the LCG for sending the SL BSR is classified into two types: a common LCG and a dedicated LCG. The dedicated LCG is for requesting an SL resource corresponding to multicast or broadcast DRX. The common LCG is for requesting another SL resource other than an SL resource corresponding to multicast or broadcast DRX or a nonlimited SL resource. The base station may determine, based on the type of the LCG for sending the SL BSR, whether the resource requested by the first terminal device is an SL resource corresponding to multicast or broadcast DRX.

In another implementation, before sending the SL BSR to the base station by using the dedicated LCG, the first terminal device first requests the base station to configure the dedicated LCG. Before requesting the base station to configure the dedicated LCG, the first terminal device sends the second indication information to the base station, and the base station configures the dedicated LCG for the first terminal device based on the second indication information.

For example, the first terminal device sends an SUI message to the base station. The SUI message includes the destination address and the QoS flow corresponding to the destination address, and the SUI message further includes the second indication information. After receiving the SUI message, the base station allocates, to the first terminal device based on the second indication information included in the SUI message, a dedicated LCG for sending the SL BSR. In other words, the base station may configure the destination address or the QoS flow corresponding to the second indication information to be transmitted on the dedicated LCG.

In still another example manner, the first terminal device may send the SL BSR to the base station by using a dedicated destination address index (destination index). After receiving the SL BSR, the base station determines, based on the destination address index for sending the SL BSR, that the resource requested by the first terminal device is an SL resource corresponding to multicast or broadcast DRX. The dedicated destination address index can uniquely identify a dedicated destination address.

The dedicated destination address index for sending the SL BSR may be preconfigured by the base station or another network device for the first terminal device, or may be predefined in a protocol. For the first terminal device, destination address indexes for sending the SL BSR are classified into two types: a common destination address index and a dedicated destination address index. The dedicated destination address index is for requesting an SL resource corresponding to multicast or broadcast DRX, and the common destination address index is for requesting another SL resource other than an SL resource corresponding to multicast or broadcast DRX or a nonlimited SL resource. The base station may determine, based on the type of the destination address index for sending the SL BSR, whether the resource requested by the first terminal device is an SL resource corresponding to multicast or broadcast DRX.

In still another example manner, the SL BSR includes the second indication information, and the base station determines, based on the second indication information, that the resource requested by the first terminal device is an SL resource corresponding to multicast or broadcast DRX. In this manner, a dedicated LCG or a dedicated destination address index does not need to be configured for the SL BSR.

In yet another example manner, the first terminal device sends the SL BSR to the base station by using a common LCG or a common destination address index, and before sending the SL BSR to the base station, the second indication information is included in the SL BSR. For example, an LCG corresponding to a destination address index or a destination address index included in the SL BSR may be associated with the second indication information. After receiving the SL BSR, the base station determines, based on the second indication information and the LCG corresponding to the destination address index or the destination address index included in the SL BSR, that the SL resource requested by the first terminal device is an SL resource corresponding to multicast or broadcast DRX.

Specifically, the first terminal device determines, based on the first indication information associated with the destination address, that the destination address index in the SL BSR is associated with the second indication information; or the first terminal device determines, based on the first indication information associated with the QoS flow, that an LCG to which the QoS flow is mapped in the SL BSR is associated with the second indication information.

In yet another example manner, the first terminal device sends an SL BSR in a specific format (format) to the base station, where the SL BSR in the specific format is specially for requesting an SL resource corresponding to multicast or broadcast DRX.

A format of the SL BSR may be preconfigured by the base station or another network device for the first terminal device or predefined in a protocol. For the first terminal device, the format of the SL BSR is classified into two types: a common format and a specific format. The SL BSR in the specific format is a newly defined format or a new media access control control element (media access control control element, MAC CE) element, and is specially for requesting an SL resource corresponding to multicast or broadcast DRX. The SL BSR in the common format includes various existing formats, used for requesting another SL resource other than an SL resource corresponding to multicast or broadcast DRX or a nonlimited SL resource. The base station may determine, based on the format of the SL BSR, whether the resource requested by the first terminal device is an SL resource corresponding to multicast or broadcast DRX.

### (3) The first request message is a UAI message.

In an example manner, the first terminal device sends a UAI message to the base station, where the UAI message includes QoS flow information and a service mode. Different from the conventional technology, the UAI message further includes the second indication information. After receiving the UAI message, the base station determines, based on the second indication information, that the SL resource requested by the first terminal device is an SL resource corresponding to multicast or broadcast DRX.

For example, the QoS flow information or the service mode in the UAI message is associated with the second indication information.

In another implementation, before sending the UAI message to the base station, the first terminal device first sends the second indication information to the base station, that is, the UAI message does not include the second indication information. For example, the first terminal device includes the second indication information associated with the destination address or the QoS flow in the sent SUI message. Further, when determining, based on the SUI message and the UAI message, that the QoS flow or the destination address associated with the second indication information in the SUI message corresponds to the QoS flow or the service mode of the UAI message, the base station determines that the SL resource requested by the first terminal device is an SL resource corresponding to multicast or broadcast DRX.

The first SL resource that may be allocated by the base station to the first terminal device based on the UAI message is a semi-persistent scheduling (semi-persistent scheduling, SPS) resource, and the SPS resource is an SL resource corresponding to multicast or broadcast DRX.

S203: The first terminal device sends the first data or the first signaling on the first SL resource.

Correspondingly, a second terminal device receives the first data or the first signaling on an SL resource corresponding to multicast or broadcast SL DRX, and the second terminal device is a receiving end terminal device. The first terminal device sends the first data or the first signaling in a multicast or broadcast manner. Optionally, the first terminal device may send the first signaling in a unicast manner.

As a receiving end, the second terminal device also receives the first indication information from the core network device or the V2X application server. The first indication information is first sent to an upper layer of the second terminal device. The AS layer of the second terminal device receives the first indication information from the upper layer. The second terminal device determines, based on the first indication information, whether currently to-be-received data or signaling supports the first DRX. If the second terminal device determines that the currently to-be-received data and/or signaling support/supports the first DRX, the second terminal device activates the first DRX. After activating the first DRX, the second terminal device may receive data or signaling on an SL resource corresponding to multicast or broadcast SL DRX, so that the data or signaling sent by the first terminal device on an SL resource corresponding to multicast or broadcast SL DRX can be received by the second terminal device.

The data to be received by the second terminal device may be understood as data that the second terminal device is interested in or data that the AS layer needs to receive as indicated by the upper layer of the second terminal device.

Optionally, when the currently to-be-received data and/or signaling support/supports the first DRX, the activating the first DRX includes the following two cases: when a plurality of pieces of to-be-received data and/or signaling exist and all the plurality of pieces of data and/or signaling support the first DRX, activating the first DRX; or when some data or some signaling in the plurality of pieces of data and/or signaling supports the first DRX, activating the first DRX.

When some data or signaling of the plurality of pieces of data and/or signaling supports the first DRX, after the first DRX is activated, data or signaling that does not support the first DRX in the plurality of pieces of data and/or signaling may not be received by the receiving end terminal device. However, when data or signaling of the plurality of pieces of data and/or signaling supports the first DRX, after the first DRX is activated, the plurality of pieces of data and/or signaling can be received by the receiving end terminal device.

The determining whether the to-be-received data or signaling supports the first DRX is specifically: comparing a destination address or a QoS flow of the to-be-received data or signaling with the destination address or the QoS flow indicated by the first indication information; and if the destination address or the QoS flow of the to-be-received data or signaling belongs to the destination address or the QoS flow indicated by the first indication information, determining that the to-be-received data or signaling supports the first DRX.

It may be understood that, although the second terminal device does not know a resource that is on an SL resource corresponding to multicast or broadcast SL DRX (that is, a sending resource pool corresponding to multicast or broadcast SL DRX configured for the first terminal device) and on which the first terminal device specifically sends data, after activating the first DRX, the second terminal device receives the data on all resources of an SL resource corresponding to multicast or broadcast SL DRX (that is, a receiving resource pool corresponding to multicast or broadcast SL DRX configured for the second terminal device). In this way, the first data or the first signaling can be successfully received.

Optionally, when the second terminal device does not activate the first DRX, the second terminal device receives the data at a full set time-frequency resource position corresponding to the receiving resource pool. If an SL resource corresponding to multicast or broadcast SL DRX is a subset of a normal (normal) receiving resource pool, the second terminal also receives the data on an SL resource corresponding to multicast or broadcast SL DRX.

Optionally, the upper layer of the second terminal device sends the first indication information to the AS layer. The first indication information may indicate whether the second terminal device supports the first DRX. In other words, a granularity of the first indication information is a granularity of the terminal device. If the second terminal device determines, based on the first indication information, that the first DRX is currently supported, the second terminal device activates the first DRX.

In this embodiment, when a first terminal device has to-be-sent first data or first signaling, the first terminal device first determines whether the first data or the first signaling supports multicast or broadcast SL DRX. When the first data or the first signaling supports multicast or broadcast SL DRX, the first terminal device obtains an SL resource corresponding to multicast or broadcast SL DRX, and sends the first data or the first signaling by using the SL resource corresponding to multicast or broadcast SL DRX. The SL resource used by a transmitting end terminal device to send the first data or the first signaling is an SL resource corresponding to multicast or broadcast SL DRX, and a receiving end terminal device also receives the first data or the first signaling on an SL resource corresponding to multicast or broadcast SL DRX. Therefore, it can be ensured that the receiving end terminal device can successfully receive the first data or the first signaling that supports multicast or broadcast SL DRX, thereby improving SL communication quality.

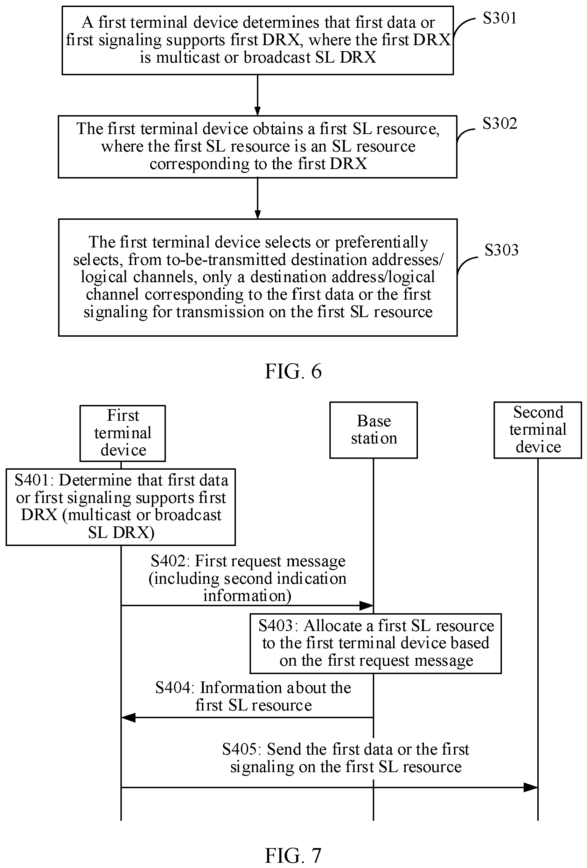

FIG. 6 is a flowchart of a sidelink communication method according to Embodiment 2 of this application. Based on Embodiment 1, this embodiment describes in detail step S203. As shown in FIG. 6, the method provided in this embodiment includes the following steps.

S301: A first terminal device determines that first data or first signaling supports first DRX, where the first DRX is multicast or broadcast SL DRX.

S302: The first terminal device obtains a first SL resource, where the first SL resource is an SL resource corresponding to the first DRX.

For a specific implementation of steps S301 and S302, refer to descriptions of steps 201 and S202 in Embodiment 1, and details are not described herein again.

S303: The first terminal device selects or preferentially selects, from to-be-transmitted destination addresses/logical channels (logical channel, LCH), only a destination address/logical channel corresponding to the first data or the first signaling for transmission on the first SL resource.

When a plurality of logical channels have data to be sent and a total amount of data to be transmitted exceeds a transmission capability of a current transmission time interval (transmission time interval, TTI), a problem of determining a logical channel for preferentially sending data needs to be considered, which is referred to as logical channel prioritization (logical channel prioritization, LCP). A TTI is a minimum unit of radio resource scheduling. It may be understood that, with evolution or change of a network, the minimum unit of radio resource scheduling may change.

During sidelink transmission, when allocating a transmission resource to a terminal device, the base station does not specify which resources are to be used by which destination addresses or logical channels. After obtaining the transmission resource, the terminal device may determine a priority of a logical channel based on a status of each logical channel. Generally, a priority of a control logical channel is higher than a priority of a data logical channel, and the priority of the data logical channel may be determined based on a QoS parameter of data transmitted on the data logical channel.

During SL LCP, the first terminal device needs to perform two selections. First, the first terminal device selects a destination address for transmission. The destination address corresponds to a plurality of QoS flows. Different QoS flows are mapped to different logical channels. Priorities of the logical channels are determined based on priorities of QoS flows carried on the logical channels.

It may be understood that S304 is performed only when the first terminal device obtains the first SL resource. When selecting a destination address for transmission, the first terminal device selects or preferentially selects, from the to-be-sent destination addresses, only a destination address corresponding to the first data or the first signaling as the destination address for transmission, and maps the selected destination address to the logical channel for transmission.

The to-be-sent destination address may include a destination address corresponding to the first data or the first signaling and another destination address. That only the destination address corresponding to the first data or the first signaling is selected from the to-be-sent destination address may be understood as that, for the first SL resource, only the destination address corresponding to the first data or the first signaling is selected for transmission in current transmission, and no other destination address is selected for transmission.

Alternatively, that the destination address corresponding to the first data or the first signaling is preferentially selected from the to-be-sent destination address may be understood as that a destination address for transmission is selected based on a priority of the to-be-sent destination address. A priority of the destination address corresponding to the first data or the first signaling is set to the highest, and the first terminal device preferentially selects the destination address with the highest priority for transmission. Therefore, the first terminal device can preferentially select the destination address corresponding to the first data or the first signaling. It may be understood that when the destination address corresponding to the first data or the first signaling does not exist, another destination address may be selected for transmission.

When the first terminal device selects a logical channel for transmission, the first terminal device selects or preferentially selects, from the to-be-transmitted logical channels, only a logical channel corresponding to the first data or the first signaling as the logical channel for transmission.

When the to-be-transmitted destination logical channel may include a logical channel corresponding to the first data or the first signaling and another logical channel, that only the logical channel corresponding to the first data or the first signaling is selected from the to-be-transmitted logical channel may be understood as: for the first SL resource, only the logical channel corresponding to the first data or the first signaling is selected for transmission in current transmission, and no other logical channel is selected for transmission.

Alternatively, the preferentially selecting a logical channel corresponding to the first data or the first signaling from the to-be-transmitted logical channel may be understood as selecting a logical channel for transmission based on a priority of the to-be-transmitted logical channel. In this embodiment, a priority of the logical channel corresponding to the first data or the first signaling is set to the highest. In the conventional technology, a priority of a logical channel is usually determined based on a logical channel of a QoS flow carried on the logical channel, and the first terminal device preferentially selects a logical channel with the highest priority for transmission. Therefore, the first terminal device can preferentially select a logical channel corresponding to the first data or the first signaling. When another logical channel in the to-be-transmitted logical channel is transmitted, a priority of a logical channel may be determined based on a logical channel of a QoS flow carried on the logical channel. It may be understood that when the logical channel corresponding to the first data or the first signaling does not exist, another logical channel may be selected for transmission.

It may be understood that, in another embodiment of this application, the first terminal device may alternatively select, by using an existing solution, a destination address/logical channel corresponding to the first data or the first signaling for transmission.

In this embodiment, when transmitting the first data or the first signaling on the first SL resource, the first terminal device only selects or preferentially selects, from to-be-transmitted destination addresses/logical channels for transmission, a destination address/logical channel corresponding to the first data or the first signaling, so that it can be ensured that the first data or the first signaling is preferentially transmitted, thereby avoiding delayed transmission or discarding of the first data or the first signaling due to LCP. Because the first data or the first signaling that supports multicast or broadcast SL DRX is usually important data or signaling, the first data or the first signaling is preferentially transmitted, thereby further improving quality of SL communication.

FIG. 7 is a signaling flowchart of a sidelink communication method according to Embodiment 3 of this application. Based on Embodiment 1 and Embodiment 2, in this embodiment, scheduling by a base station is used as an example to describe the sidelink communication method. In this embodiment, an example in which a network device is a base station is used for description. As shown in FIG. 7, the method provided in this embodiment includes the following steps.

S401: A first terminal device determines that first data or first signaling supports first DRX, where the first DRX is multicast or broadcast SL DRX.

For a specific implementation of this step, refer to descriptions of step S201 in Embodiment 1, and details are not described herein again.

S402: The first terminal device sends a first request message to the base station, where the first request message includes second indication information.

The second indication information indicates that an SL resource required by data or signaling corresponding to a destination address or a QoS flow is an SL resource corresponding to multicast or broadcast DRX. Optionally, the first request message is any one of the following messages: an SL SR, an SL BSR, and a UAI message. Correspondingly, the second indication information may be carried in an SUI message.

S403: The base station allocates a first SL resource to the first terminal device based on the first request message.

When the first request message is an SL SR, in an example manner, the first terminal device sends a dedicated SL SR to the base station. After receiving the dedicated SL SR, the base station determines, based on the dedicated SL SR, that the resource requested by the first terminal device is an SL resource corresponding to multicast or broadcast SL DRX, and allocates the first SL resource to the first terminal device. The dedicated SL SR may be preconfigured by the base station or another network device for the first terminal device, or may be defined in a protocol. In this manner, the dedicated SL SR may not include the second indication information, and the base station may determine, based on the dedicated SL SR, that the resource requested by the first terminal device is an SL resource corresponding to multicast or broadcast DRX. Optionally, the dedicated SL SR may alternatively include the second indication information. The base station determines, based on the dedicated SL SR and the second indication information, that the resource requested by the first terminal device is an SL resource corresponding to multicast or broadcast DRX.

For example, an SR ID corresponding to the dedicated SL SR is predefined in a protocol. When the first terminal device sends the SL SR to the network device on the resource corresponding to the SR ID, the network device may learn, based on the resource, that the first terminal device requests a sidelink transmission resource corresponding to multicast or broadcast SL DRX, to configure a corresponding sidelink transmission resource for the first terminal device.

In another implementation, before receiving the dedicated SL SR, the base station configures the dedicated SL SR for the first terminal device based on a request of the first terminal device. When requesting to configure the dedicated SL SR, the first terminal device sends a request message carrying the second indication information to the base station. The base station configures the dedicated SL SR for the first terminal device based on the second indication information.

When the first request message is an SL SR, in another example manner, the first terminal device sends the SL SR (which may also be referred to as a common SL SR) to the base station, where the SL SR includes the second indication information. The base station determines, based on the second indication information, that the resource requested by the first terminal device is an SL resource corresponding to multicast or broadcast DRX, and allocates the first SL resource to the first terminal device.

When the first request message is an SL BSR, in an example manner, the first terminal device may send the SL BSR to the base station by using a dedicated LCG or a dedicated destination address index. After receiving the SL BSR, the base station determines, based on the dedicated LCG or the dedicated destination address index of the SL BSR, that the resource requested by the first terminal device is an SL resource corresponding to multicast or broadcast DRX, and allocates the first SL resource to the first terminal device. The dedicated LCG or the dedicated destination address index may be preconfigured by the base station or another network device for the first terminal device, or may be defined in a protocol. In this manner, the SL BSR may not include the second indication information, and the base station may determine, based on the dedicated LCG or the dedicated destination address index, that the resource requested by the first terminal device is an SL resource corresponding to multicast or broadcast DRX. Optionally, the SL BSR may alternatively include the second indication information. The base station determines, based on the dedicated LCG or the dedicated destination address index and the second indication information, that the resource requested by the first terminal device is an SL resource corresponding to multicast or broadcast DRX.

When the first request message is an SL BSR, in another example manner, the first terminal device sends the SL BSR to the base station by using a common LCG or a common destination address index of the SL BSR, where the SL BSR includes second indication information. The base station determines, based on the second indication information, that the resource requested by the first terminal device is an SL resource corresponding to multicast or broadcast DRX, and allocates the first SL resource to the first terminal device.

When the first request message is an SL BSR, in still another example manner, the first terminal device sends the SL BSR in a specific format (format) to the base station, where the SL BSR in the specific format is specially for requesting an SL resource corresponding to multicast or broadcast DRX. After receiving the SL BSR, the base station determines, based on the format of the SL BSR, that the resource requested by the first terminal device is an SL resource corresponding to multicast or broadcast DRX, and allocates the first SL resource to the first terminal device.

When the first request message is a UAI message, after receiving the UAI message, the base station determines, based on the second indication information included in the UAI message, that the resource requested by the first terminal device is an SL resource corresponding to multicast or broadcast DRX, and allocates the first SL resource to the first terminal device.

Alternatively, before receiving the UAI message, the base station receives the SUI message sent by the first terminal device. The SUI message includes second indication information, and the second indication information is associated with a destination address or a QoS flow included in the SUI message. After receiving the UAI message, when the QoS flow or the service mode included in the UAI message corresponds to the destination address or the QoS flow associated with the second indication information, the base station determines that the SL resource requested by the first terminal device is an SL resource corresponding to multicast or broadcast DRX, and allocates the first SL resource to the first terminal device.

S404: The base station sends information about the first SL resource to the first terminal device.

The base station may send a response message of the first request message, an RRC reconfiguration message or DCI carrying the information about the first SL resource to the first terminal device.

S405: The first terminal device sends the first data or the first signaling to a second terminal device on the first SL resource.

The first terminal device may send the first data or the first signaling on the first SL resource by using an existing LCP rule, or may only select or preferentially select, from to-be-transmitted destination addresses/logical channels by using the method in Embodiment 2, a destination address/logical channel corresponding to the first data or the first signaling, to transmit the first data or the first signaling on the first SL resource. For a specific implementation, refer to the description of step 304 in Embodiment 2. Details are not described herein again.

Correspondingly, the second terminal device receives the first data or the first signaling on the first SL resource. It may be understood that the first terminal device sends the first data or the first signaling in a multicast or broadcast manner, and a terminal device in a multicast or broadcast receiving range may be used as the second terminal device to receive the first data or the first signaling.

In this embodiment, when the first terminal device requests a resource from the first base station, the second indication information is carried in the first request message, and the base station may determine, based on the second indication information, that the resource requested by the first terminal device is an SL resource corresponding to multicast or broadcast DRX, to allocate the required resource to the first terminal device.

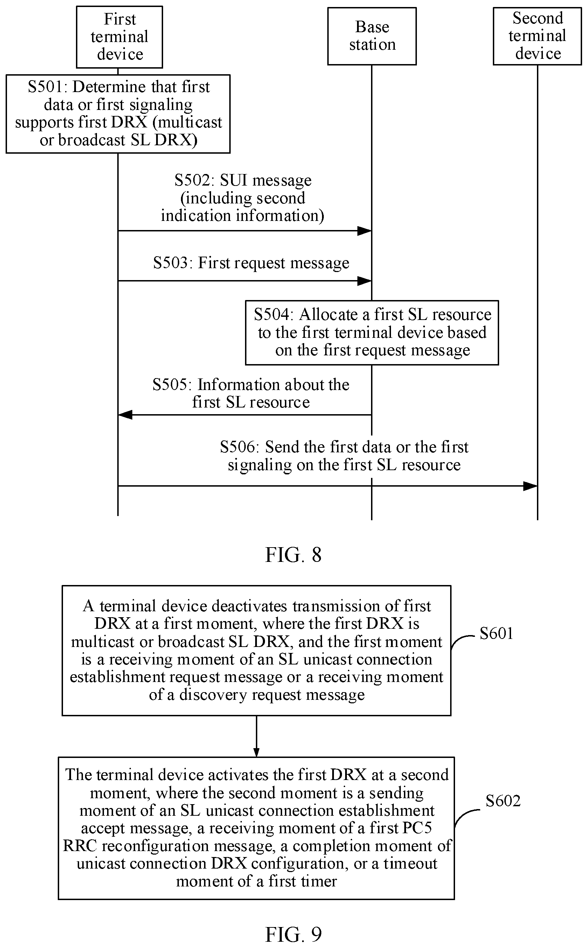

FIG. 8 is a signaling flowchart of a sidelink communication method according to Embodiment 4 of this application. A difference between this embodiment and Embodiment 3 is as follows: Before sending the first request message to the base station, the first terminal device first sends the second indication information to the base station, and the base station allocates a resource to the first terminal device based on the second indication information and the first request message. As shown in FIG. 8, the method provided in this embodiment includes the following steps.

S501: A first terminal device determines that first data or first signaling supports first DRX, where the first DRX is multicast or broadcast SL DRX.

S502: The first terminal device sends an SUI message to the base station, where the SUI message includes second indication information.

This embodiment is described by using an example in which the second indication information is carried in the SUI message. It may be understood that the second indication information may be carried in another message, which is not limited in this embodiment.

S503: The first terminal device sends a first request message to the base station.

Optionally, the first request message is any one of the following messages: an SL SR, an SL BSR, and a UAI message.

S504: The base station allocates a first SL resource to the first terminal device based on the first request message.

When the first request message is an SL SR, in an example manner, the first terminal device sends a dedicated SL SR to the base station. After receiving the dedicated SL SR, the base station determines, based on the dedicated SL SR, that the resource requested by the first terminal device is an SL resource corresponding to multicast or broadcast SL DRX, and allocates the first SL resource to the first terminal device. The dedicated SL SR is allocated by the base station to the first terminal device based on the second indication information in the SUI message. Correspondingly, before S503, the base station sends configuration information of the dedicated SL SR to the first terminal device through an SUI response message or another message.

When the first request message is an SL BSR, in an example manner, the first terminal device may send the SL BSR to the base station by using a dedicated LCG or a dedicated destination address index. After receiving the SL BSR, the base station determines, based on the dedicated LCG or the dedicated destination address index of the SL BSR, that the resource requested by the first terminal device is an SL resource corresponding to multicast or broadcast DRX, and allocates the first SL resource to the first terminal device. The dedicated LCG or the dedicated destination address index is configured by the base station for the first terminal device based on the second indication information in the SUI message. Correspondingly, before S503, the base station sends configuration information of the dedicated LCG or the dedicated destination address index to the first terminal device through an SUI response message or another message.

Optionally, the SL BSR may alternatively include the second indication information. The base station determines, based on the dedicated LCG or the dedicated destination address index and the second indication information, that the resource requested by the first terminal device is an SL resource corresponding to multicast or broadcast DRX.

When the first request message is an SL BSR, in another example manner, the first terminal device sends the SL BSR to the base station by using a common LCG or a common destination address index. The SL BSR includes a destination address index or a QoS flow identifier. The base station allocates the first SL resource to the first terminal device based on the destination address or the QoS flow associated with the second indication information and the destination address index or the QoS flow identifier included in the SL BSR. Specifically, when the destination address index or the QoS flow identifier included in the SL BSR corresponds to the destination address or the QoS flow associated with the second indication information, the base station determines that the SL resource requested by the first terminal device is an SL resource corresponding to multicast or broadcast DRX.

When the first request message is a UAI message, after receiving the UAI message, when the QoS flow information and the service mode that are included in the UAI message correspond to the destination address or the QoS flow associated with the second indication information, the base station determines that the resource requested by the first terminal device is an SL resource corresponding to multicast or broadcast DRX, and allocates the first SL resource to the first terminal device.

S505: The base station sends information about the first SL resource to the first terminal device.

S506: The first terminal device sends the first data or the first signaling to a second terminal device on the first SL resource.

In this embodiment, before requesting the resource from the first base station, the first terminal device sends the second indication information to the base station, where the second indication information indicates that an SL resource required by data or signaling corresponding to the destination address or the QoS flow is an SL resource corresponding to multicast or broadcast DRX, and requests the first SL resource from the base station by using the first request message. The base station determines, based on the second indication information and the first request message, that the resource requested by the first terminal device is an SL resource corresponding to multicast or broadcast DRX, to allocate the required resource to the first terminal device.

In actual application, a terminal device supports both multicast or broadcast SL DRX and unicast SL DRX. Before a unicast connection is established, the terminal device may perform sending or receiving only by using an SL resource corresponding to multicast or broadcast SL DRX. To be specific, the terminal device enables a radio frequency receiver only at a time corresponding to an SL resource corresponding to multicast or broadcast SL DRX. Because the terminal device can perform receiving only at some moments (that is, at a time corresponding to an SL resource corresponding to multicast or broadcast SL DRX), if a transmitting end terminal device sends data at a time other than a time corresponding to an SL resource corresponding to multicast or broadcast SL DRX but a receiving end terminal device receives data only at a time corresponding to an SL resource corresponding to multicast or broadcast SL DRX, a message in a process of establishing a unicast connection is missing, affecting establishment of the unicast connection.

To resolve the foregoing problem, Embodiment 5 of this application provides a sidelink communication method. FIG. 9 is a signaling flowchart of a sidelink communication method according to Embodiment 5 of this application. This embodiment is described from a perspective of a receiving end. As shown in FIG. 9, the method provided in this embodiment includes the following steps.

S601: A terminal device deactivates transmission of first DRX at a first moment, where the first DRX is multicast or broadcast SL DRX, and the first moment is a receiving moment of an SL unicast connection establishment request message or a receiving moment of a discovery request message.

In this embodiment, the terminal device may immediately deactivate the first DRX at the first moment, or may deactivate the first DRX after a preset delay time at the first moment. The preset delay time may be configured by a network device.

Optionally, the first moment may alternatively be a sending moment of an announcement message.

S602: The terminal device activates the first DRX at a second moment, where the second moment is a sending moment of an SL unicast connection establishment accept message, a receiving moment of a first PC5 RRC reconfiguration message, a completion moment of unicast connection DRX configuration, or a timeout moment of a first timer.

In the method, a receiving end terminal device disables the first DRX between the first moment and the second moment, and the receiving end terminal device receives data in all time periods corresponding to a normal SL resource. In this embodiment, after the receiving end terminal device disables the first DRX between the first moment and the second moment, it means that the receiving end terminal device can receive data at all time corresponding to the receiving resource pool between the first moment and the second moment, and is not limited to receiving data only on an SL resource corresponding to multicast or broadcast SL DRX.

The first moment is the receiving moment of the SL unicast connection establishment message (that is, the first message shown in FIG. 3) or the receiving moment of the discovery request message (for example, a discovery message of solicitation), and the message received at the second moment corresponds to the message received at the first moment. Correspondingly, the second moment is the sending moment of the SL unicast connection establishment accept message (that is, the fourth message shown in FIG. 3), the receiving moment of the first PC5 RRC reconfiguration message, the completion moment of unicast connection DRX configuration, or the timeout moment of the first timer.

Optionally, the first timer is started at the first moment, and timing duration of the first timer is preconfigured or predefined. Optionally, the terminal device may alternatively enable the first timer after a delay of a specific time after the first moment.

It can be learned from the values of the first moment and the second moment that, the method in this embodiment is equivalent to disabling the first DRX in a time period from start of establishment of a unicast connection to completion of establishment of a unicast connection, that is, the receiving end terminal device can normally receive data in the time period from start of establishment of a unicast connection to completion of establishment of a unicast connection, to ensure that all messages sent by the transmitting end device in a process of establishing a unicast connection can be received by the receiving end terminal device, no message in the process of establishing a unicast connection is missing, and multicast or broadcast SL DRX does not affect establishment of the unicast connection.

In this embodiment, from a perspective of a receiving end, a similar problem also exists at a transmitting end. In this embodiment, a transmitting end terminal device may deactivate the first DRX at a third moment, and activate the first DRX at a fourth moment. In other words, the transmitting end terminal device disables the first DRX between the third moment and the fourth moment. The third moment may be a sending moment of the SL unicast connection establishment message or a sending moment of the discovery request message. Correspondingly, the fourth moment is a receiving moment of the SL unicast connection establishment accept message, a sending moment of the first PC5 RRC reconfiguration message, the completion moment of unicast connection DRX configuration, or an enable moment of the first timer.

Optionally, the third moment may alternatively be a receiving moment of the announcement message.

After the unicast connection is established, both multicast or broadcast SL DRX and unicast SL DRX exist. Correspondingly, the terminal device can perform sending or receiving by using an SL resource corresponding to multicast or broadcast SL DRX, or can perform sending or receiving by using an SL resource corresponding to the unicast connection. In this embodiment, the terminal device may use a union set of a resource corresponding to multicast or broadcast SL DRX and a resource corresponding to the unicast SL DRX in time domain as a time for sending or receiving data by the terminal device.

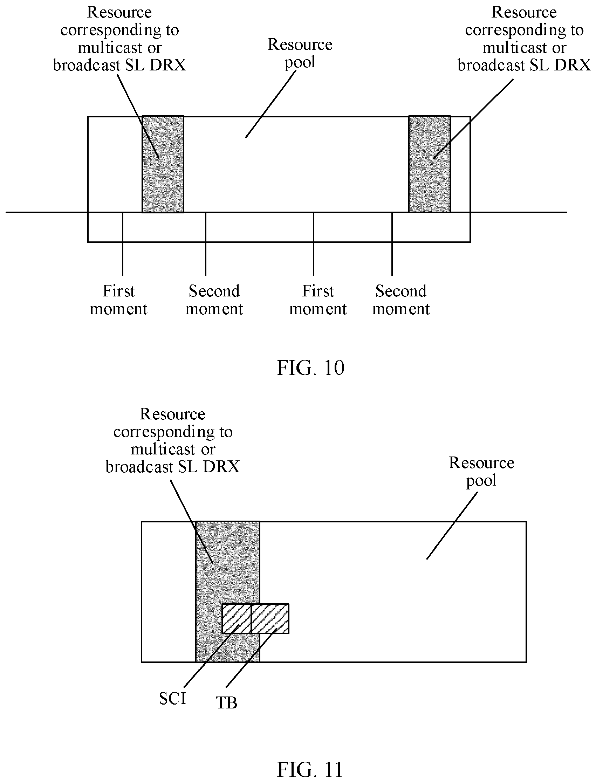

FIG. 11 is a schematic diagram of sending data by a terminal device. As shown in FIG. 11, a part of an SL resource (that is, a resource shown by a slash part in the figure) occupied by a first terminal device to send data is located in an SL resource (that is, a resource shown by a gray part in the figure) corresponding to multicast or broadcast SL DRX, and the other part is located outside an SL resource corresponding to multicast or broadcast SL DRX. For example, a resource occupied by the SCI in the data transmitted by the first terminal device is located in an SL resource corresponding to multicast or broadcast SL DRX, and all or some of the resources occupied by the transport block (transport block, TB) indicated by the SCI are located outside an SL resource corresponding to multicast or broadcast SL DRX. In this case, if a second terminal device is interested in the data sent by the first terminal device and the second terminal device activates multicast or broadcast SL DRX, the second terminal device may successfully receive the SCI on an SL resource corresponding to multicast or broadcast SL DRX, but the TB indicated by the SCI cannot be received on an SL resource corresponding to multicast or broadcast SL DRX. In the conventional technology, how to process a TB is not described, which may cause an exception in SL communication or a receiving exception of the terminal device.

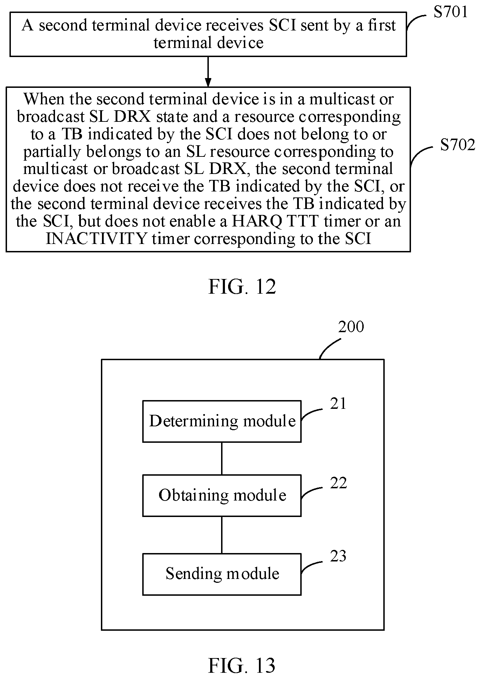

To resolve the foregoing problem, an embodiment provides a sidelink communication method. FIG. 12 is a flowchart of a sidelink communication method according to Embodiment 6 of this application. As shown in FIG. 12, the method provided in this embodiment includes the following steps.

S701: A second terminal device receives SCI sent by a first terminal device.

S702: When the second terminal device is in a multicast or broadcast SL DRX state and a resource corresponding to a TB indicated by the SCI does not belong to or partially belongs to an SL resource corresponding to multicast or broadcast SL DRX, the second terminal device does not receive the TB indicated by the SCI, or the second terminal device receives the TB indicated by the SCI, but does not enable a hybrid automatic repeat request round-trip timer (hybrid automatic repeat request round trip time, HARQ TTT) timer or an inactivity (INACTIVITY) timer corresponding to the SCI.

That the second terminal device is in a multicast or broadcast SL DRX state may be understood as that the second terminal device currently activates multicast or broadcast SL DRX, or the second terminal device currently receives data by using an SL resource corresponding to multicast or broadcast SL DRX.

The HARQ TTT timer is associated with a HARQ process. When the HARQ TTT timer is running, a terminal device does not need to listen to a physical sidelink control channel (physical sidelink control channel, PSCCH) channel, and the PSCCH channel is used for transmitting SCI. In the conventional technology, after receiving the SCI, the second terminal device enables the HARQ TTT timer, and receives a TB indicated by the SCI. In this embodiment, after receiving the SCI, the second terminal device does not enable the HARQ TTT timer, to avoid subsequent receiving of corresponding retransmitted data.

The INACTIVITY timer is associated with a unicast connection. When the INACTIVITY timer is running, the terminal device needs to listen to a PSCCH channel. In the conventional technology, after receiving SCI and when the SCI indicates new transmission, the second terminal device enables the INACTIVITY timer, and receives a TB indicated by the SCI. In this embodiment, after receiving the SCI, the second terminal device does not enable the INACTIVITY timer, to avoid subsequent receiving of corresponding retransmitted data.

In this embodiment, when the second terminal device is in a multicast or broadcast SL DRX state, and the resource corresponding to the TB indicated by the received SCI does not belong to or partially belongs to an SL resource corresponding to multicast or broadcast SL DRX, an action of the second terminal device is specified, that is, the second terminal device does not receive the TB indicated by the SCI, or receives the TB indicated by the SCI, but does not enable the HARQ RTT timer or the INACTIVITY timer corresponding to the SCI, so that normal SL communication can be ensured.

FIG. 13 is a schematic diagram of a structure of a first terminal device according to Embodiment 7 of this application. As shown in FIG. 13, a first terminal device 200 provided in this embodiment includes a determining module 21, an obtaining module 22, and a sending module 23.

The determining module 21 is configured to determine that first data or first signaling supports first discontinuous reception DRX, where the first DRX is multicast or broadcast sidelink SL DRX.

The obtaining module 22 is configured to obtain a first SL resource, where the first SL resource is an SL resource corresponding to the first DRX.

The sending module 23 is configured to send the first data or the first signaling on the first SL resource.

Optionally, the determining module 21 is specifically configured to receive first indication information from an upper layer of the first terminal device, where the first indication information indicates that the first data or the first signaling supports multicast or broadcast SL DRX.

Optionally, the first indication information includes: a service or a QoS flow associated with the first data supports multicast or broadcast SL DRX.

Optionally, the obtaining module 22 is specifically configured to: send a first request message to a network device, where the first request message is for requesting the first SL resource; and receive information about the first SL resource sent by the network device.

In an example manner, the first request message includes second indication information, and the second indication information indicates that an SL resource required by data or signaling corresponding to a destination address or a QoS flow is an SL resource corresponding to multicast or broadcast DRX.

In another example manner, the obtaining module 22 is further configured to: before sending the first request message to the network device, send second indication information to the network device, where the second indication information indicates that an SL resource required by data or signaling corresponding to a destination address or a QoS flow is an SL resource corresponding to multicast or broadcast DRX.

Optionally, the first request message is any one of the following messages: an SL SR, an SL BSR, and a UAI message.

When the first request message is any one of the following messages: an SL SR, an SL BSR, and a UAI message, optionally, the second indication information is carried in an SUI message.

Optionally, the first signaling includes one or more pieces of the following signaling: a message in an SL unicast connection establishment process, a message in a relay UE discovery process, an SL capability related message of UE, and a first PC5 radio resource control RRC reconfiguration message.

Optionally, the obtaining module 22 is specifically configured to obtain the first SL resource by measuring an idle SL resource.

Optionally, the sending module 23 is specifically configured to: only select or preferentially select, from to-be-transmitted destination addresses, a destination address corresponding to the first data or the first signaling as a destination address for transmission; or only select or preferentially select, from to-be-transmitted logical channels, a logical channel corresponding to the first data or the first signaling as a logical channel for transmission.

The first terminal device 200 provided in this embodiment may be configured to perform the method steps performed by the first terminal device in Embodiment 1 to Embodiment 4. Specific implementations and technical effects are similar, and details are not described herein again.

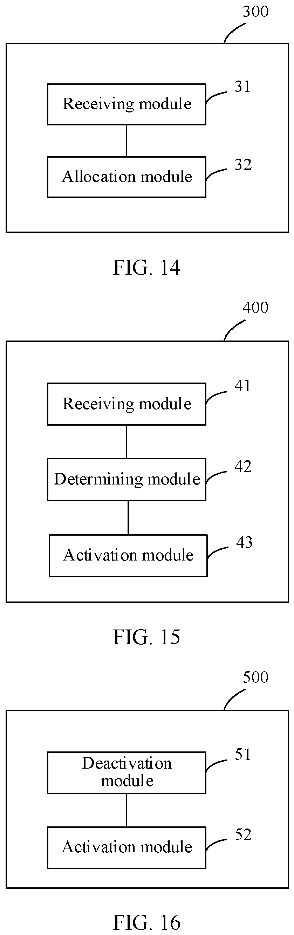

FIG. 14 is a schematic diagram of a structure of a network device according to Embodiment 8 of this application. As shown in FIG. 14, a network device 300 provided in this embodiment includes a receiving module 31 and an allocation module 32.

The receiving module 31 is configured to receive a first request message sent by a first terminal device, where the first request message is for requesting a first sidelink SL resource, the first SL resource is an SL resource corresponding to first discontinuous reception DRX, and the first DRX is multicast or broadcast DRX.

The allocation module 32 is configured to allocate the first SL resource to the first terminal device based on the first request message.

In an example manner, the first request message includes second indication information, and the second indication information indicates that an SL resource required by data or signaling corresponding to a destination address or a QoS flow is an SL resource corresponding to multicast or broadcast DRX.

In another example manner, the receiving module 31 is further configured to: before receiving the first request message, receive second indication information sent by the first terminal device, where the second indication information indicates that an SL resource required by data or signaling corresponding to a destination address or a QoS flow is an SL resource corresponding to multicast or broadcast DRX.

Optionally, the first request message is any one of the following messages: an SL SR, an SL BSR, and a UAI message.

When the first request message is any one of the following messages: an SL SR, an SL BSR, and a UAI message, optionally, the second indication information is carried in a sidelink user information SUI message.

Optionally, the first signaling includes one or more pieces of the following signaling: a message in an SL unicast connection establishment process, a message in a relay UE discovery process, an SL capability related message of UE, and a first PC5 radio resource control RRC reconfiguration message.

The network device 300 provided in this embodiment may be configured to perform the method steps performed by the network device in Embodiment 1 to Embodiment 4. Specific implementations and technical effects are similar, and details are not described herein again.

FIG. 15 is a schematic diagram of a structure of a second terminal device according to Embodiment 9 of this application. As shown in FIG. 15, a second terminal device 400 provided in this embodiment includes a receiving module 41, a determining module 42, and an activation module 43.

The receiving module 41 is configured to receive first indication information from an upper layer of the second terminal device, where the first indication information indicates that first data or first signaling supports first discontinuous reception DRX, and the first DRX is multicast or broadcast SL DRX.

The determining module 42 is configured to determine, based on the first indication information, that currently to-be-received data or signaling supports the first DRX.

The activation module 43 is configured to activate the first DRX.

It may be understood that the receiving module 41 and the activation module 43 may alternatively be implemented by using one module, for example, a processing module. The processing module implements all functions of the receiving module 41 and the activation module 43.

The second terminal device 400 provided in this embodiment may be configured to perform the method steps performed by the second terminal device in Embodiment 1 to Embodiment 4. Specific implementations and technical effects are similar, and details are not described herein again.

FIG. 16 is a schematic diagram of a structure of a second terminal device according to Embodiment 10 of this application. As shown in FIG. 16, a second terminal device 500 provided in this embodiment includes a deactivation module 51 and an activation module 52.

The deactivation module 51 is configured to deactivate first discontinuous reception DRX at a first moment, where the first DRX is multicast or broadcast sidelink SL DRX, and the first moment is a receiving moment of an SL unicast connection establishment message or a receiving moment of a discovery request message.

The activation module 52 is configured to activate the first DRX at a second moment, where the second moment is a receiving moment of an SL unicast connection establishment accept message, a receiving moment of a first PC5 radio resource control RRC reconfiguration message, a completion moment of unicast connection DRX configuration, or a timeout moment of a first timer.

Optionally, a terminal device starts the first timer at the first moment.

Optionally, the deactivation module 51 is specifically configured to deactivate the first DRX after a preset time is delayed at the first moment.

It may be understood that the deactivation module 51 and the activation module 52 may alternatively be implemented by using one module, for example, a processing module. The processing module implements all functions of the deactivation module 51 and the activation module 52.

The second terminal device 500 provided in this embodiment may be configured to perform the method in Embodiment 5. Specific implementations and technical effects are similar, and details are not described herein again.

It may be understood that a module in embodiments of this application may also be referred to as a unit. For example, the deactivation module may also be referred to as a deactivation unit.

The system, apparatus, and method described in this application may be implemented in other manners. For example, the apparatus embodiment described above is merely example. For example, the unit/module division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, functional units in embodiments of this application may be integrated into one processing unit, each of the units may exist independently physically, or two or more units may be integrated into one unit.

The foregoing modules or units may be implemented by using software, hardware, or a combination of software and hardware. For example, the determining module in FIG. 13 may be implemented based on software.

In this application, "implemented by using software" means that a processor reads and executes program instructions stored in a memory to implement a function corresponding to the foregoing module or unit. The processor is a processing circuit that has a function of executing the program instructions, and includes but is not limited to at least one of the following processing circuits that can run program instructions, such as a central processing unit (central processing unit, CPU), a microprocessor, a digital signal processor (digital signal processor, DSP), a microcontroller unit (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip, for example, presented in a form of an integrated chip whose processing function includes only a software instruction execution function, or may be presented in a form of a SoC (system on a chip, system on a chip). That is, in addition to a processing circuit (usually referred to as a "core") that can run program instructions, a chip further includes another hardware circuit (which may be implemented based on an ASIC or an FPGA) configured to implement a specific function. Correspondingly, in addition to the software instruction execution function, the processing function may further include various hardware acceleration functions (such as AI calculation, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be separately packaged semiconductor chips, or may be integrated with other circuits (such as a CPU and a DSP) and then packaged into a semiconductor chip. For example, the ASIC and the CPU may be integrated together to form a SoC, and the SoC is independently packaged into a chip; or the FPGA and the CPU may be integrated together to form a SoPC (system on a programmable chip, system on a programmable chip).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software usually has better flexibility but poorer performance than hardware, and hardware is exactly opposite. Therefore, a person skilled in the art may select software, hardware, or a combination thereof for implementation based on an actual requirement.

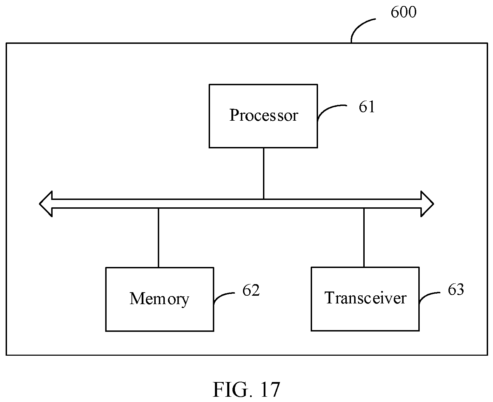

FIG. 17 is a schematic diagram of a structure of a terminal device according to Embodiment 11 of this application. As shown in FIG. 17, a terminal device 600 includes a processor 61, a memory 62, and a transceiver 63. The memory 62 is configured to store instructions. The transceiver 63 is configured to communicate with another device. The processor 61 is configured to execute the instructions stored in the memory, so that the terminal device 600 performs the method performed by the first terminal device or the second terminal device in the foregoing method embodiments.

Embodiment 12 of this application provides a network device. For a structure of the network device, refer to FIG. 17. The memory 62 is configured to store instructions. The transceiver 63 is configured to communicate with another device. The processor 61 is configured to execute the instructions stored in the memory 62, so that the network device can perform the method performed by the network device in the foregoing method embodiments.

In a specific implementation, in an embodiment, the network device or the terminal device may include a plurality of processors. Each of the processors may be a single-core processor (single-CPU) or may be a multi-core processor (multi-CPU). The processor may be a digital signal processor (DSP), a general-purpose microprocessor, an application-specific integrated circuit (ASIC), a field programmable logic array (FPGA), another equivalent integrated or discrete logic circuit, or the like.

The memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, or an optical disc storage (including a compressed optical disc, a laser disc, an optical disc, a digital versatile disc, a Bluray disc, and the like), a magnetic disk storage medium or another magnetic storage device, or any other medium that can be used to carry or store expected program code in a form of instructions or a data structure and that can be accessed by a computer, but is not limited thereto. The memory may independently exist and may be connected to the processor by the communication bus. The memory may alternatively be integrated with the processor.

Embodiment 13 of this application provides a computer-readable storage medium. The computer-readable storage medium stores instructions, and when the instructions are executed, a computer is enabled to perform the method performed by the first terminal device or the second terminal device in the foregoing method embodiments.

Embodiment 14 of this application provides a computer-readable storage medium. The computer-readable storage medium stores instructions, and when the instructions are executed, a computer is enabled to perform the method performed by the network device in the foregoing method embodiments.

This application further provides a computer program product. When the computer program product is executed by a computer, functions of any one of the foregoing method embodiments are implemented.

The foregoing descriptions are merely example specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink communication method, applied to a first terminal device, and comprising:
determining that first data or first signaling supports first discontinuous reception DRX, wherein the first DRX is multicast or broadcast sidelink SL DRX;
obtaining a first SL resource, wherein the first SL resource is an SL resource corresponding to the first DRX; and
sending the first data or the first signaling on the first SL resource.

2. The method according to claim 1, wherein the determining that first data or first signaling supports first DRX comprises:
receiving, by an access stratum of the first terminal device, first indication information from an upper layer, wherein the first indication information indicates that the first data or the first signaling supports multicast or broadcast SL DRX.

3. The method according to claim 1, wherein the first indication information comprises: a service or a quality of service QoS flow associated with the first data supports multicast or broadcast SL DRX.

4. The method according to any one of claims 1 to 3, wherein the obtaining a first SL resource comprises:
sending a first request message to a network device, wherein the first request message is for requesting the first SL resource; and
receiving information about the first SL resource sent by the network device.

5. The method according to claim 4, wherein the first request message comprises second indication information, and the second indication information indicates that an SL resource required by data or signaling corresponding to a destination address or a QoS flow is an SL resource corresponding to multicast or broadcast DRX.

6. The method according to claim 4, wherein before the sending a first request message to a network device, the method further comprises:
sending second indication information to the network device, wherein the second indication information indicates that an SL resource required by data or signaling corresponding to a destination address or a QoS flow is an SL resource corresponding to multicast or broadcast DRX.

7. The method according to any one of claims 4 to 6, wherein the first request message is any one of the following messages: an SL scheduling request SR, an SL buffer status report BSR, and a user assistance information UAI message.

8. The method according to claim 6, wherein the first request message is any one of the following messages: an SL scheduling request SR, an SL buffer status report BSR, and a user assistance information UAI message, and the second indication information is carried in a sidelink user information SUI message.

9. The method according to any one of claims 1 to 8, wherein the first signaling comprises one or more pieces of the following signaling: a message in an SL unicast connection establishment process, a message in a relay UE discovery process, an SL capability related message of UE, and a first PC5 radio resource control RRC reconfiguration message.

10. The method according to any one of claims 1 to 3, wherein the obtaining a first sidelink SL resource comprises:
obtaining the first SL resource by measuring an idle SL resource.

11. The method according to any one of claims 1 to 10, wherein the sending the first data or the first signaling on the first SL resource comprises:
only selecting or preferentially selecting, from to-be-transmitted destination addresses, a destination address corresponding to the first data or the first signaling as a destination address for transmission.

12. The method according to any one of claims 1 to 10, wherein the sending the first data or the first signaling on the first SL resource comprises:
only selecting or preferentially selecting, from to-be-transmitted logical channels, a logical channel corresponding to the first data or the first signaling as a logical channel for transmission.

13. A sidelink communication method, applied to a terminal device, and comprising:
receiving a first request message sent by a first terminal device, wherein the first request message is for requesting a first sidelink SL resource, the first SL resource is an SL resource corresponding to first discontinuous reception DRX, and the first DRX is multicast or broadcast DRX; and
allocating the first SL resource to the first terminal device based on the first request message.

14. The method according to claim 13, wherein the first request message comprises second indication information, and the second indication information indicates that an SL resource required by data or signaling corresponding to a destination address or a QoS flow is an SL resource corresponding to multicast or broadcast DRX.

15. The method according to claim 13, wherein before the receiving a first request message sent by a first terminal device, the method further comprises:
receiving second indication information sent by the first terminal device, wherein the second indication information indicates that an SL resource required by data or signaling corresponding to a destination address or a QoS flow is an SL resource corresponding to multicast or broadcast DRX.

16. The method according to any one of claims 13 to 15, wherein the first request message is any one of the following messages: an SL scheduling request SR, an SL buffer status report BSR, and a user assistance information UAI message.

17. The method according to claim 15, wherein the first request message is any one of the following messages: an SL scheduling request SR, an SL buffer status report BSR, and a user assistance information UAI message, and the second indication information is carried in a sidelink user information SUI message.

18. The method according to any one of claims 13 to 17, wherein the first signaling comprises one or more pieces of the following signaling: a message in an SL unicast connection establishment process, a message in a relay UE discovery process, an SL capability related message of UE, and a first PC5 radio resource control RRC reconfiguration message.

19. A sidelink communication method, applied to a second terminal device, and comprising:
receiving, by an access stratum, first indication information from an upper layer, wherein the first indication information indicates that first data or first signaling supports first discontinuous reception DRX, and the first DRX is multicast or broadcast SL DRX; and
activating the first DRX when it is determined, based on the first indication information, that currently to-be-received data or signaling supports the first DRX.

20. A sidelink communication method, applied to a second terminal device, and comprising:
deactivating first discontinuous reception DRX at a first moment, wherein the first DRX is multicast or broadcast sidelink SL DRX, and the first moment is a receiving moment of an SL unicast connection establishment message or a receiving moment of a discovery request message; and
activating the first DRX at a second moment, wherein the second moment is a receiving moment of an SL unicast connection establishment request message, a sending moment of a first PC5 radio resource control RRC reconfiguration message, a completion moment of unicast connection DRX configuration, or a timeout moment of a first timer.

21. The method according to claim 20, wherein the first timer is started at the first moment.

22. The method according to claim 20 or 21, wherein the deactivating first DRX at a first moment comprises:
deactivating the first DRX after a preset time is delayed at the first moment.

23. A first terminal device, comprising:
a determining module, configured to determine that first data or first signaling supports first discontinuous reception DRX, wherein the first DRX is multicast or broadcast sidelink SL DRX;
an obtaining module, configured to obtain a first SL resource, wherein the first SL resource is an SL resource corresponding to the first DRX; and
a sending module, configured to send the first data or the first signaling on the first SL resource.

24. The device according to claim 23, wherein the determining module is specifically configured to:
receive first indication information from an upper layer of the first terminal device, wherein the first indication information indicates that the first data or the first signaling supports multicast or broadcast SL DRX.

25. The device according to claim 23, wherein the first indication information comprises: a service or a quality of service QoS flow associated with the first data supports multicast or broadcast SL DRX.

26. The device according to any one of claims 23 to 25, wherein the obtaining module is specifically configured to:
send a first request message to a network device, wherein the first request message is for requesting the first SL resource; and
receive information about the first SL resource sent by the network device.

27. The device according to claim 26, wherein the first request message comprises second indication information, and the second indication information indicates that an SL resource required by data or signaling corresponding to a destination address or a QoS flow is an SL resource corresponding to multicast or broadcast DRX.

28. The device according to claim 26, wherein the obtaining module is further configured to:
before sending the first request message to the network device, send second indication information to the network device, wherein the second indication information indicates that an SL resource required by data or signaling corresponding to a destination address or a QoS flow is an SL resource corresponding to multicast or broadcast DRX.

29. The device according to any one of claims 26 to 28, wherein the first request message is any one of the following messages: an SL scheduling request SR, an SL buffer status report BSR, and a user assistance information UAI message.

30. The device according to claim 28, wherein the first request message is any one of the following messages: an SL scheduling request SR, an SL buffer status report BSR, and a user assistance information UAI message, and the second indication information is carried in a sidelink user information SUI message.

31. The device according to any one of claims 23 to 30, wherein the first signaling comprises one or more pieces of the following signaling: a message in an SL unicast connection establishment process, a message in a relay UE discovery process, an SL capability related message of UE, and a first PC5 radio resource control RRC reconfiguration message.

32. The device according to any one of claims 23 to 25, wherein the obtaining module is specifically configured to:
obtain the first SL resource by measuring an idle SL resource.

33. The device according to any one of claims 23 to 32, wherein the sending module is specifically configured to:
only select or preferentially select, from to-be-transmitted destination addresses, a destination address corresponding to the first data or the first signaling as a destination address for transmission.

34. The device according to any one of claims 23 to 32, wherein the sending module is specifically configured to:
only select or preferentially select, from to-be-transmitted logical channels, a logical channel corresponding to the first data or the first signaling as a logical channel for transmission.

35. A network device, comprising:
a receiving module, configured to receive a first request message sent by a first terminal device, wherein the first request message is for requesting a first sidelink SL resource, the first SL resource is an SL resource corresponding to first discontinuous reception DRX, and the first DRX is multicast or broadcast DRX; and
an allocation module, configured to allocate the first SL resource to the first terminal device based on the first request message.

36. The device according to claim 35, wherein the first request message comprises second indication information, and the second indication information indicates that an SL resource required by data or signaling corresponding to a destination address or a QoS flow is an SL resource corresponding to multicast or broadcast DRX.

37. The device according to claim 35, wherein the receiving module is further configured to:
before receiving the first request message, receive second indication information sent by the first terminal device, wherein the second indication information indicates that an SL resource required by data or signaling corresponding to a destination address or a QoS flow is an SL resource corresponding to multicast or broadcast DRX.

38. The device according to any one of claims 35 to 37, wherein the first request message is any one of the following messages: an SL scheduling request SR, an SL buffer status report BSR, and a user assistance information UAI message.

39. The device according to claim 37, wherein the first request message is any one of the following messages: an SL scheduling request SR, an SL buffer status report BSR, and a user assistance information UAI message, and the second indication information is carried in a sidelink user information SUI message.

40. The device according to any one of claims 35 to 39, wherein the first signaling comprises one or more pieces of the following signaling: a message in an SL unicast connection establishment process, a message in a relay UE discovery process, an SL capability related message of UE, and a first PC5 radio resource control RRC reconfiguration message.

41. A second terminal device, comprising:
a receiving module, configured to receive first indication information from an upper layer of the second terminal device, wherein the first indication information indicates that first data or first signaling supports first discontinuous reception DRX, and the first DRX is multicast or broadcast SL DRX;
a determining module, configured to determine, based on the first indication information, that currently to-be-received data or signaling supports the first DRX; and
an activation module, configured to activate the first DRX.

42. A terminal device, comprising:
a deactivation module, configured to deactivate first discontinuous reception DRX at a first moment, wherein the first DRX is multicast or broadcast sidelink SL DRX, and the first moment is a receiving moment of an SL unicast connection establishment message or a receiving moment of a discovery request message; and
an activation module, configured to activate the first DRX at a second moment, wherein the second moment is a receiving moment of an SL unicast connection establishment accept message, a receiving moment of a first PC5 radio resource control RRC reconfiguration message, a completion moment of unicast connection DRX configuration, or a timeout moment of a first timer.

43. The device according to claim 42, wherein the terminal device starts the first timer at the first moment.

44. The device according to claim 42 or 43, wherein the deactivation module is specifically configured to:
deactivate the first DRX after a preset time is delayed at the first moment.

45. A terminal device, comprising a processor, a memory, and a transceiver, wherein the memory is configured to store instructions, the transceiver is configured to communicate with another device, and the processor is configured to execute the instructions stored in the memory, so that the terminal device performs the method according to any one of claims 1 to 12, claim 19, and claims 20 to 22.

46. A network device, comprising a processor, a memory, and a transceiver, wherein the memory is configured to store instructions, the transceiver is configured to communicate with another device, and the processor is configured to execute the instructions stored in the memory, so that the network device performs the method according to any one of claims 13 to 18.

47. A computer-readable storage medium, wherein the computer-readable storage medium stores instructions, and when the instructions are executed, a computer is enabled to perform the method according to any one of claims 1 to 22.

48. A computer program product, wherein the computer program product comprises instructions, and when the instructions are executed, a computer is enabled to perform the method according to any one of claims 1 to 22.

49. A communication system, comprising: a first terminal device, a second terminal device, and a network device, wherein the first terminal device is configured to perform the method according to any one of claims 1 to 12, the second terminal device is configured to perform the method according to claim 19, and the network device is configured to perform the method according to any one of claims 13 to 18.
